(19) Europäisches Patentamt
European Patent Office
Office européen des brevets

(11) **EP 2 772 730 B1**

(12) **EUROPÄISCHE PATENTSCHRIFT**

(45) Veröffentlichungstag und Bekanntmachung des Hinweises auf die Patenterteilung:
**06.11.2019 Patentblatt 2019/45**

(51) Int Cl.:
*G01F 1/84* (2006.01)      *G01N 9/00* (2006.01)
*G01N 11/08* (2006.01)      *G01F 1/74* (2006.01)
*G01F 15/02* (2006.01)

(21) Anmeldenummer: **14000778.2**

(22) Anmeldetag: **07.09.2006**

(54) **Verfahren zum Messen eines in einer Rohrleitung strömenden Mediums sowie Meßsystem dafür**

Process for measuring a medium flowing in a pipe and measurement system therefor

Procédé pour mesurer un agent s'écoulant dans une conduite et système de mesure à cet effet

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **27.09.2005 DE 102005046319**

(43) Veröffentlichungstag der Anmeldung:
**03.09.2014 Patentblatt 2014/36**

(62) Dokumentnummer(n) der früheren Anmeldung(en) nach Art. 76 EPÜ:
**06793316.8 / 1 931 949**

(73) Patentinhaber: **Endress + Hauser Flowtec AG**
**4153 Reinach/BL (CH)**

(72) Erfinder:
• **Drahm, Wolfgang**
**85435 Erding (DE)**

• **Rieder, Alfred**
**64032 Landshut (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**WO-A-00/36379      WO-A2-93/19348**
**US-B2- 6 505 519**

• **KALOTAY P: "ON-LINE VISCOSITY MEASUREMENT USING CORIOLIS MASS FLOWMETERS", FLOW MEASUREMENT AND INSTRUMENTATION, BUTTERWORTH-HEINEMANN, OXFORD, GB, Bd. 5, Nr. 4, 1. Oktober 1994 (1994-10-01), Seiten 303-308, XP000612473, ISSN: 0955-5986**

**Beschreibung**

Die Erfindung betrifft einen ein Verfahren zum Messen von wenigstens einem physikalischen Strömungsparameter, insb. eines Massedurchflusses und/oder einer Dichte und/oder einer Viskosität, eines In einer Rohrleitung strömenden zwei- oder mehrphasigen Mediums sowie ein dafür geeignetes Meßsystem.

In der Prozeßmeß- und Automatisierungstechnik werden für die hochgenaue Messung physikalischer Parameter, wie z.B. dem Massedurchfluß, der Dichte und/oder der Viskosität, eines in einer Rohrleitung strömenden Mediums, beispielsweise einem Gas und/oder einer Flüssigkeit, oftmals solche In-LIne-Meßgeräte verwendet, die mittels eines vom Medium durchströmten Meßaufnehmers vom Vibrationstyp und einer daran angeschlossenen Meß- und Betriebsschaltung, Im Medium Reaktionskräfte, wie z.B. mit dem Massedurchfluß korrespondierende Corlollskräfte, mit der Dichte korrespondierende Trägheitskräfte oder mit der Viskosität korrespondierende Reibungskräfte etc., bewirken und von diesen abgeleitet ein den jeweiligen Massedurchfluß, ein die jeweilige Vikosität und/oder ein die Jeweilige Dichte des Mediums repräsentierendes Meßsignal erzeugen. Derartige In-LIne-Meßgeräte mit einem Meßaufnehmer vom Vibrationstyp sowie deren Wirkungsweise sind dem Fachmann an und für sich bekannt und z.B. in der WO-A 03/095950, WO-A 03/095949, der WO-A 02/37063, der WO-A 01/33174, der WO-A 00/57141, der WO-A 99/39164, der WO-A 98/07009, der WO-A 95/16897, der WO-A 88/03281, der US 2003/0208325, der US-B 68 80 410, der US-B 66 91 583, der US-B 66 51 513, der US-B 65 13 393, der US-B 65 05 519, der US-A 60 06 609, der US-A 58 69 770, der US-A 58 61 561, der US-A 57 96 011, der US-A 56 16 868, der US-A 56 02 346, der US-A 56 02 345, der US-A 55 31 126, der US-A 53 59 881, der US-A 53 01 557, der US-A 52 53 533, der US-A 52 18 873, der US-A 50 69 074, der US-A 48 76 898, der US-A 47 33 569, der US-A 46 60 421, der US-A 45 24 610, der US-A 44 91 025, der US-A 41 87 721, der EP-A 1 291 639, der EP-A 1 281 938, der EP-A 1 001 254 oder der EP-A 553 939 ausführlich und detailiert beschrieben. Zum Führen des strömenden Mediums umfassen die Meßaufnehmer jeweils mindestens ein in einem zumeist als geschlossenes Aufnehmer-Gehäuse ausgebildeten Trägerrahmen gehaltertes Meßrohr mit einem gebogenen oder geraden Rohrsegment, das zum Erzeugen oben genannter Reaktionskräfte, angetrieben von einer elektromechanischen Erregeranordnung, im Betrieb vibrieren gelassen wird. Zum Erfassen, insb. einläßseitger und auslaßseitger. Vibrationen des Rohrsegments weisen die Meßaufnehmer ferner Jeweils eine auf Bewegungen des Rohrsegments reagierende Sensoranordnung auf.

Bei Coriolis-Massedurchflußmeßgeräten beruht die Messung des Massedurchflusses eines In einer Rohrleitung strömenden Mediums bekanntlich darauf, daß das Medium durch das in Rohrleitung eingefügte und im Betrieb zumindest anteilig lateral zu einer Messrohrachse schwingende Meßrohr strömen gelassen wird, wodurch im Medium Corioliskräfte induziert werden. Diese wiederum bewirken, daß einlaßseitige und auslaßseitige Bereiche des Meßrohrs zueinander phasenverschoben schwingen. Die Größe dieser Phasenverschiebungen dient dabei als ein Maß für den Massedurchfluß. Die Schwingungen des Meßrohrs werden daher mittels zweier entlang des Meßrohres voneinander beabstandeter Schwingungssensoren der vorgenannten Sensoranordnung erfaßt und in Schwingungsmeßsignale gewandelt, aus deren gegenseitiger Phasenverschiebung der Massedurchfluß abgeleitet wird. Bereits die eingangs referierte US-A 41 87 721 erwähnt ferner, daß mittels solcher In-Line-Meßgeräte auch die momentane Dichte des strömenden Mediums meßbar ist, und zwar anhand einer Frequenz wenigstens eines der von der Sensoranordnung gelieferten Schwingungsmeßsignale. Überdies wird zumeist auch eine Temperatur des Mediums in geeigneter Weise direkt gemessen, beispielsweise mittels eines am Meßrohr angeordneten Temperatursensors. Zudem können gerade Meßrohre, zu Torsionsschwingungen um eine im wesentlichen mit der jeweiligen Messrohrlängsachse parallel verlaufenden oder koinzidierenden Torsions-Schwingungsachse angeregt, bewirken, daß im hindurchgeführten Medium radiale Scherkräfte erzeugt werden, wodurch wiederum den Torsionsschwingungen signifikant Schwingungsenergie entzogen und Im Medium dissipiert wird. Daraus resultierend erfolgt eine erhebliche Bedämpfung der Torsionsschwingungen des schwingenden Meßrohrs zu deren Aufrechterhaltung demzufolge dem Meßrohr zusätzlich elektrische Erregerleistung zugeführt werden muß. Abgeleitet von einer zum Aufrechterhalten der Torsionsschwingungen des Meßrohrs entsprechend erforderlichen elektrischen Erregerleistung, kann in der dem Fachmann bekannten Welse mittels des Meßaufnehmers so beispielsweise auch eine Viskosität des Mediums zumindest nährungswelse bestimmt werden, vgl. hierzu insb. auch die US-A45 24 610, die US-A 52 53 533, die US-A 60 06 609 oder die US-B 66 51 513. Es kann insoweit im folgenden ohne weiteres vorausgesetzt werden, daß - selbst wenn nicht ausdrücklich beschrieben - mittels moderner In-Line-Meßgeräten mit einem Messaufnehmer vom Vibationstyp, insb. mittels Coriolis-Massendurchfluß-Meßgeräten, jedenfalls auch Dichte, Viskosität und/oder Temperatur des Mediums gemessen werden können, zumal diese bei der Massendurchflußmessung ohnehin zur Kompensation von Meßfehlern infolge schwankender Mediumsdichte und/oder Mediumsviskosität oftmals heran zu ziehen sind, vgl. hierzu insb. die bereits erwähnten US-B 65 13 393, US-A 60 06 609, US-A 56 02 346, WO-A 02/37063, WO-A 99/39164 oder auch die WO-A 00/36379.

Neben derartigen Meßaufnehmern vom Vibrationstyp werden in der Prozeßmeß- und Automatisierungstechnik für die In-LIne-Messungen häufig auch In-Line-Meßgeräte mit magnetisch-Induktiven Meßaufnehmem oder die Laufzeit von In Strömungsrichtung ausgesendeten Ultraschallwellen auswertende, insb. auch nach dem Doppler-Prinzip arbeitende, Meßaufnehmem eingesetzt. Da der prinzipielle Aufbau und die Funktionsweise solcher magnetisch-induktiven Meßaufnehmer z.B. in der EP-A 1 039 269, US-A 60 31 740, US-A 55 40 103, US-A 53 51 554, US-A 45 63 904 etc. oder solcher Ultraschall-Meßaufnehmer z.B. In der US-B 63 97 663, der US-B 63 30 831, der US-B 62 93 156, der US-B 61 89 389, der US-A 55 31 124, der US-A 54 63 905, der US-A 51 31 279, der US-A 47 87 252 etc. hinlänglich beschrieben und überdies dem Fachmann ebenfalls hinreichend bekannt sind, kann an dieser Stelle auf eine detailliertere Erläuterung dieser Meßprinzipien verzichtet werden.

Bei der Verwendung von solchen In-Line-Meßgeräten mit wenigstens einem in den Verlauf der Mediums führenden Rohrleitung eingefügten Meßrohr hat es sich jedoch gezeigt, daß bei inhomogenen, insb. zwel- oder mehrphasigen Medien, die damit erzeugten Meßsignale in erheblichem Maße nicht reproduzierbaren Schwankungen unterliegen können, obwohl die die Meßsignale signifikant beinflussenden Mediumsparameter, insb. der Massendurchfluß, praktisch konstant gehaltenen sind, vgl. hierzu auch die eingangs erwähnten US-B 6910 366, US-B 68 80 410, US-B 65 05 519, US-B 63 11 136 oder US-A 54 00 657. Infolgedessen sind diese Meßsignale bei mehrphasigen Mediumsströmen für eine hoch genaue Messung des jeweiligen physikalischen Strömungsparameters praktisch unbrauchbar. Solche inhomogenen Medien können beispielsweise Flüssigkeiten sein, in die, wie z.B. bei Dosier- oder Abfüllprozessen praktisch unvermeidbar, ein in der Rohrleitung vorhandenes Gas, insb. Luft, eingetragen ist oder aus denen ein gelöstes Medium, z.B. Kohlendioxid, ausgast und zur Schaumbildung führt. Als ein weitere Beispiele für solche Inhomogenen Medien seien ferner auch Emulsionen, Naß- oder Sattdampf sowie Festetoffpartikel mitführende Fluide genannt.

Im besonderen ist bei In-Line-Meßgeräten mit einem Meßaufnehmer vom Vibrationstyp, wie beispielsweise auch in der JP-A 10-281846, der EP-A 1 291 638, der US-B 68 80 410, der US-B 65 05 519 oder der US-A 45 24 610 diskutiert, festgestellt worden, daß die von den Schwingungen des Meßrohrs abgeleiteten Schwingungsmeßsignale, insb. auch die erwähnte Phasenverschiebung, bei zwei- oder mehrphasigen Medien trotz dem der Massendurchfluß sowie auch Viskosität und Dichte In den einzelnen Mediumsphasen praktisch konstantgehalten und/oder entsprechend mitberücksichtigt werden, in erheblichem Maße Schwankungen unterliegen und so ggf. für die Messung des jeweiligen physikalischen Strömungsparameters ohne abhelfende Maßnahmen völlig unbrauchbar werden können. Als Ursachen für die mit der Messung von inhomogenen Medien mittels Messaufnehmern vom Vibrationstyp einhergehenden Meßfehler seien exemplarisch das einseitige Anlagern oder Absetzen von in Flüssigkeiten mitgeführten Gasblasen oder Feststoffpartikein innen an der Messrohrwand und der sogenannte "Bubble-Effekt" erwähnt, bei dem In der Flüssigkeit mitgeführte Gasblasen als Strömungskörper für quer zur Messrohrlängsachse beschleunigte Flüssigkeitstellvolumina wirkt

Zur Verringerung der mit zwei- oder mehrphasigen Medien einhergehenden Meßfehler ist beispielsweise in der US-B 68 80 410 eine der eigentlichen Durchflußmessung vorausgehende Strömungs- bzw. Mediumskonditionierung vorgeschlagen. Als eine weitere Möglichkeit zur Umgehung der Probleme von solchen Meßaufnehmem in Verbindung mit Inhomogenen Medien wird beispielsweise sowohl In der JP-A 10-281846 als auch in der US-B 65 05 519 jeweils eine, insb. auf der Auswertung von Defiziten zwischen einer hochgenau gemessenen, tatsächlichen Mediumsdichte und einer mittels Coriolls-Massedurchflußmessgeräten im Betrieb ermittelten, scheinbaren Mediumsdichte beruhende Korrektur der auf den Schwingungsmeßsignalen beruhenden Durchflußmessung, Insb. der Massendurchflußmessung, beschrieben. Weitere Verfahren zur Vermeidung und/oder Korrektur von mit zwei- oder mehrphasigen Medien einhergehenden Meßfehlern sind darüber hinaus beispielsweise in der US-A 2005/0081643, der US-A 200510022611, der WO-A 2005/057137 oder der WO-A 2005/057131 beschrieben.

Alternativ oder In Ergänzung dazu können zudem auch mittels mehreren In-Line-Meßgeräten gebildete, insb. diversitär operierende, Meßsysteme, wie sie z.B. in der US-A 54 00 657, der US-A 52 59 250, der US-A 2005/0016292 oder der WO-A 03/062759, der WO-A 03/073047, der WO-A 03/087735, oder der WO-A 04/046660 vorgeschlagen sind, zur Messung von zwei- oder mehrphasigen Medien eingesetzt werden. Allerdings kann ein erheblicher Nachteil solcher, durchaus sehr präzise messenden Meßsysteme in der hohen Komplexität dem damit einhergenden hohen Installationskosten einerseits und den hohen Wartungs- und Instandhaltungskosten andererseits gesehen werden. Darüber hinaus besitzen solche Meßsysteme zumeist einen vergleichsweise hohen Platzbedarf.

Eine Aufgabe der Erfindung besteht daher darin, ein Verfahren anzugeben, das dafür geeignet ist, solche Strömungsparameter wie z.B. die Strömungsgeschwindigkeit, den Massendurchfluß oder den Volumendurchfluß, eines In einer Rohrleitung strömenden Mediums einerseits auch für den Fall möglichst genau zu messen, daß das Medium zwei- oder mehrphasig ausgebildet ist, und andererseits für den Fall, daß das Medium im wesentlichen einphasige Ist, so genau gemessen werden kann, das ein allfälliger Meßfehler wesentlich kleiner als 5%, insb. kleiner als 1%, des Meßwerts ist. Ferner besteht eine Aufgabe der Erfindung darin ein entsprechend geeignetes, insb. auch diversitäres, Meßsystem anzugeben, das möglichst, insb. auch unter Verwendung herkömmlicher In-Line-Meßgeräte, einfach und/oder modular aufgebaut werden kann.

Zur Lösung der Aufgabe besteht die Erfindung in einem Verfahren gemäß dem Anspruch 1.

Des weiteren besteht die Erfindung in einem Meßsystem gemäß Anspruch 14, welches Meßsystem ausgestaltet ist, nämliches Verfahren umzusetzen.

Nach einer ersten Ausgestaltung des Verfahrens der Erfindung vibriert das wenigstens eine Meßrohr im Betrieb zumindest zeitweise.

Nach einer ersten Weiterbildung der ersten Ausgestaltung der Erfindung werden Meßwerte erster Art und Meßwerte zweiter Art im wesentlichen simultan oder zumindest zueinander zeitnah erzeugt werden. Nach einer zweiten Weiterbildung der ersten Ausgestaltung der Erfindung werden Meßwerte erster Art und Meßwerte zweiter Art im wesentlichen asynchron oder zumindest zeitlich versetzt, insb. alternativ, erzeugt. Nach einer dritten Weiterbildung der ersten Ausgestaltung der Erfindung werden Meßwerte zweiter Art zumindest zeitweise dann erzeugt, wenn das Medium im wesentlichen einphasig ausgebildet ist oder zumindest als einphasig ausgebildet angenommen wird.

Nach einer vierten Weiterbildung der ersten Ausgestaltung der Erfindung werden die Meßwerte zweiter Art zumindest anteilig anhand von erfaßten Vibrationen des Meßrohrs ermittelt.

Nach einer fünften Weiterbildung der ersten Ausgestaltung der Erfindung werden die Meßwerte zweiter Art zumindest zeitweise und/oder zumindest anteilig basierend auf einer, insb. unter Verwendung des wenigstens einen Meßsignals ermittelten, Schwingungsfrequenz des vibrierenden Meßrohrs generiert.

Nach einer sechsten Weiterbildung der ersten Ausgestaltung der Erfindung umfaßt dieses weiters Schritte des Erzeugens wenigstens eines, insb. einlaßseitige, Vibrationen des Meßrohrs repräsentierenden ersten Meßsignals mittels eines ersten Schwingungssensors der Sensoranordnung und eines, insb. auslaßseitige, Vibrationen des Meßrohrs repräsentierenden zweiten Meßsignals mittels eines zweiten Schwingungssensors der Sensoranordnung, wobei die Sensoranordnung des in-Line-Meßgeräts wenigstens zwei, insb. in Strömungsrichtung des Mediums, voneinander beabstandete, Jeweils am Meßrohr und/oder in dessen Nähe angeordnete Schwingungssensoren aufweist. Insbesondere ist bei dieser Weiterbllung vorgesehn, daß die Meßwerte zweiter Art einen Massendurchfluß oder einen Volumendurchfluß des Mediums repräsentieren, wobei zur Ermittlung von wenigstens einem dieser Meßwerte zweiter Art die wenigstens zwei mittels der Sensoranordnung des In-Line-Meßgeräts erzeugten Meßsignale verwendet werden.

Nach einer siebenten Weiterbildung der ersten Ausgestaltung der Erfindung werden die Meßwerte zweiter Art zumindest zeitweise und/oder zumindest anteilig basierend auf einer zwischen dem ersten und dem zweiten Meßsignal bestehenden Phasendifferenz ermittelt.

Nach einer zweiten Ausgestaltung des Verfahrens der Erfindung umfaßt dieses weiters einen Schritt des Detektierens, daß das Medium zumindest zweiphasig ausgebildet ist.

Nach einer dritten Ausgestaltung des Verfahrens der Erfindung umfaßt das In-Line-Meßgerät ferner eine am wenigstens einen Meßrohr angeordnete und zumindest mittelbar auf das darin geführte Medium einwirkende elektrophysikalischen Erregeranordnung.

Nach einer vierten Ausgestaltung des Verfahrens der Erfindung umfaßt der Schritt des Erzeugens des ersten Meßsignals folgende weitere Schritte:

- Erzeugen von mit dem wenigstens einen physikalischen Parameter des Mediums im Meßrohr korrespondierenden Reaktionen im Medium mittels der Erregeranordnung des In-Line-Meßgeräts und
- Erfassen von mit dem wenigstens einen physikalischen Parameter des Mediums Im Meßrohr korrespondierenden Reaktionen des Mediums mittels der Sensoranordnung des In-Line-Meßgeräts.

Nach einer fünften Ausgestaltung des Verfahrens der Erfindung handelt es sich bei dem In-Line-Meßgerät um ein solches mit einem Meßaufnehmer vom Vibrationstyp, und umfaßt der Schritt des Erzeugens von mit dem wenigstens einen physikalischen Parameter des Mediums im Meßrohr korrespondierenden Reaktionen im Medium einen Schritt des Vibrierenlassens des Meßrohrs zum Erzeugen von Vibrationen des Meßrohrs beeinflusssenden Reaktionskräften im darin geführten Medium, insb. Trägheitskräften, Reibungskräften und/oder Corioliskräften.

Nach einer sechsten Ausgestaltung des Verfahrens der Erfindung umfaßt der Schritt des Erfassens von mit dem wenigstens einen physikalischen Parameter des Mediums im Meßrohr korrespondierenden Reaktionen des Mediums mittels der Sensoranordnung weiters einen Schritt des Erfassens von Vibrationen des Meßrohrs.

Nach einer siebten Ausgestaltung des Verfahrens der Erfindung umfaßt die Sensoranordnung des In-Line-Meßgeräts wenigstens einen am Meßrohr und/oder in dessen Nähe angordneten Schwingungssensor, und repräsentiert das mittels der Sensoranordnung des In-Une-Meßgeräts erzeugte wenigstens eine Meßsignal Vibrationen des Meßrohrs.

Nach einer achten Ausgestaltung des Verfahrens der Erfindung umfassen die Schritte des Erfassens von im Medium wirksamen Drücken Schritte des Erfassens wenigstens eines einlaßseltig des wenigstens einen Meßrohrs im strömenden Medium wirksamen Drucks und/oder Schritte des Erfassen wenigstens eines auslaßseltig des wenigstens einen Meßrohrs im strömenden Medium wirksamen Drucks.

Nach einer neunten Ausgestaltung des Verfahrens der Erfindung werden zumindest zeitweise wenigstens ein einlaßseitig des Meßrohrs erfaßter erster Druck im Medium und wenigstens ein auslaßseitg des Meßrohrs erfaßter zweiter Druck im Medium, insb. eine anhand des ersten und zweiten Drucks ermittelte Druckdifferenz im strömenden Medium, beim Erzeugen von den wenigstens einen physikalischen Strömungsparameter repräsentierenden Meßwerten berücksichtigt.

Nach einer zehnten Ausgestaltung des Verfahrens der Erfindung werden zum Erfassen von Im strömenden Medium anstehenden Drücken wenigstens zwei Druckaufnehmer verwendet, von denen ein erster Druckaufnehmer elnlaßseitig des wenigstens einen Meßrohrs und ein zweiter Druckaufnehmer auslaßseitig des wenigstens einen Meßrohrs angeordnet sind.

Nach einer elften Ausgestaltung des Verfahrens der Erfindung umfassen die Schritte des Erfassens von im Medium wirksamen Drücken Schritte des Übertragens von mittels des ersten und zweiten Druckaufnehmers erfaßten Drücken über Druckmittler an eine, insb. differentiell und/oder kapazitiv, messenden Druckmeßzelle.

Nach einer zwölften Ausgestaltung des Verfahrens der Erfindung umfassen die Schritte des Erfassens von Im Medium wirksamen Drücken Schritte des Umwandeins von an die Druckmeßzelle übertragenen Drücken in zumindest ein Meßsignal, das auf zeitliche Änderungen wenigstens eines der erfaßten Änderungen mit einer korrespondierenden Veränderung wenigstens einer seiner Eigenschaften reagiert.

Nach einer dreizehnten Ausgestaltung des Verfahrens der Erfindung handelt es sich bei der Übertragungsfunktion um eine statische, insb. nichtlineare, Kennlinienfunktion.

Nach einer vierzehnten Ausgestaltung des Verfahrens der Erfindung wird zum Anpassen der Übertragungsfunktion an das zu messende Medium wenigstens ein die Übertragungsfunktion beschreibender Koeffizient unter Verwendung des wenigstens einen mittels der Sensoranordnung des In-Line-Meßgeräts erzeugten Meßsignals verändert.

Nach einer fünfzehnten Ausgestaltung des Verfahrens der Erfindung handelt es sich bei der Übertragungsfunktion um eine statische, insb. nichtlineare, Kennlinienfunktion, und wird zum Anpassen der Übertragungsfunktion an das zu messende Medium wenigstens ein die Übertragungsfunktion beschreibender Koeffizient unter Verwendung wenigstens eines der Meßwerte zweiter Art verändert.

Nach einer ersten Ausgestaltung des Meßsystems der Erfindung liefert der Durchflußaufnehmer wenigstens ein Vibrationen des wenigstens einen Meßrohrs repräsentierendes Meßsignal.

Nach einer zweiten Ausgestaltung des Meßsystems der Erfindung ist das wenigstens eine Meßrohr im wesentlichen gerade.

Nach einer dritten Ausgestaltung des Meßsystems der Erfindung ist das wenigstens eine Meßrohr, insb. U- oder V-förmig, gekrümmt.

Nach einer vierten Ausgestaltung des Meßsystems der Erfindung umfaßt dieses weiters zwei, insb. zueinander im wesentlichen parallel verlaufende und/oder im wesentlichen baugleiche, in den Verlauf der Rohrleitung eingesetzte Meßrohre.

Nach einer fünften Ausgestaltung des Meßsystems der Erfindung sind die beiden Druckaufnehmer unter Bildung eines Differenzdruckaufnehmers mit einer, insb. differentiell und/oder kapazitiv messenden, Druckmeßzelle verbunden.

Nach einer sechsten Ausgestaltung des Meßsystems der Erfindung liefert der Differenzdruckaufnehmer wenigstens ein eine Druckdifferenz im strömenden Medium repräsentierendes Meßsignal.

Nach einer siebenten Ausgestaltung des Meßsystems der Erfindung umfaßt dieses eine erste Meßgerät-Elektronik sowie eine mit dieser zumindest zeitweise kommunizierende zweite Meßgerät-Elektronik, wobei der Durchflußaufnehmer unter Bildung eines In-Line-Meßgeräts für in Rohrleitungen strömende Medien, insb. eines Coriolis-Massendurchfluß-/ Dichte-Meßgeräts, mit der ersten Meßgerät-Elektronik elektrisch gekoppelt ist, wobei die beiden Druckaufnehmer unter Bildung eines Differenzdruck-Meßgeräts für in Rohrleitungen strömende Medien mit der zweiten Meßgerät-Elektronik elektrisch gekoppelt sind.

Ein Grundgedanke der Erfindung besteht darin, ein diversitäres Maßsystem zu schaffen, das einerseits geeignet ist, Strömungsparameter der beschriebenen Art auch bei zwei- oder mehrphasigen Medien genau zu messen und von dem andererseits zumindest eines der Messgeräte, - das Differenzdruck-Meßgerät - unter Verwendung des anderen Messgeräts - hier das In-Line-Meßgerät - als Master-Einheit Im Betrieb wiederkehrend nachkallbrierbar ist. Ein weiterer Grundgedanke der Erfindung besteht ferner darin, das wenigstens eine Messrohr des In-Line-Meßgeräts als Ersatz für die in herkömmlichen Differenzdruck-Meßgeräten für die Erzeugung von Druckabfällen üblicherweise verwendeten Blende zu nutzen, wodurch einerseits ein strömungsrelevantes Bauteil eingespart und andererseits im Vergleich zu einer seriellen Verschattung herkömmlicher Differenzdruck-Meßgeräte mit In-Lina-Meßgeräten der beschriebenen Art ein geringerer Druckabfall in der Rohrleitung bzw. im hindurchströmenden Medium verursacht wird. Die Erfindung beruht dabei im besonderen auf der Erkenntnis, daß Differenzdruck-Meßgeräte bei ausgeprägter Mehrphasenströmung Strömungsparameter der in Rede stehenden Art robuster und zumeist auch genauer zu messen in der Lage sind, als beispielsweise Corlolis-Massedurchflußmesser. Anderseits konnte festgestellt werde, daß der eigentlich eher geringere Druckabfall Ober In-Line-Meßgeräten der beschriebenenen Art, insb. bei Verwendung gebogener Messrohre, doch ausreichend sein kann, um eine darauf basierende Durchflussmessung zu ermöglichen. Dies umso mehr, als daß beispielsweise moderne Coriolis-Massedurchflußmeßgeräte über ihre Messgerät-Elektronlken bereits in der Satndarausführung inzwischen enorme Rechenkapazitäten bereitstellen.

Ein Vorteil der Erfindung ist ferner auch darin zu sehen, daß das Maßsystem und somit auch das dementsprechende Verfahren durch Verschalten auch herkömmlicher In-Line-Meßgeräte der beschriebenen Art mit herkömmlichen Differenzdruck-Meßgeraten realisiert werden können. Hierbei ist es von besonderem Vorteil, wenn wenigstens eines der für das erfindungsgemäße Meßsystem verwendeten Messgeräte Ober eine programmierbare Messgerät-Elektronik verfügt, da dadurch das Meßsystem durch lediglich geringfüge Rekonfigurierung der Fimware, insb. die Meßsignal-Auswerfung bzw. die Messwert-Ermittlung betreffenden Software-Komponenten, und eine entsprechende elektrische Verschaltung der beiden Messgerät-Elektroniken, sei es über einen übergeordneten Feldbus oder direkt über die Messwerte entsprechend ausgebende und/oder einlesende Signalports der jeweiligen Messgerät-Elektronlken, realisiert werden kann. Ein weiterer Vorteil der Erfindung ist zudem auch darin zu sehen, daß für das Meßsystem in der industriellen Meß- und Automatisierungstechnik etablierte In-Line-Meßgeräte der unterschiedlichsten Meßprinzipien, wie z.B. solche mit einem Durchflußmeßaufnehmer vom Vibrationstyp als auch solche mit magnetisch-induktive Meßaufnehmer oder in Ultraschall-Meßaufnehmer, verwendet werden können.

Die Erfindung und weitere Vorteile werden nachfolgend anhand von Ausführungsbeispielen näher erläutert, die in den Figuren der Zeichnung dargestellt sind; gleiche Teile sind in den Figuren mit gleichen Bezugszeichen versehen. Falls es der Übersichtlichkeit dienlich ist, wird auf die Angabe bereits vergebener Bezugszeichen in nachfolgenden Figuren verzichtet.

Fig. 1 bis 3    zeigen jeweils in einer Seitenansicht Ausführungsbeispiele eines mittels eines In-Line-Meßgeräts sowie eines Differenzdruck-Maßgeräts zum Messen wenigstens eines physikalischen Strömungsparameters eines in einer Rohrleitung strömenden Mediums,

Fig. 4    zeigt perspektivisch in einer ersten Seitenansicht ein Ausführungsbeispiel eines für eines der in den Fig. 1 bis 3 gezeigten Meßsystems geeigneten In-Line-Moßgeräts mit einem Meßaufnehmer vom Vibrations-Typ und

Fig. 5    zeigt ein Ausführungsbeispiel einer für das In-Line-Meßgerät von Fig. 1, 2 oder 3 geeigneten Messgerät-Elektronik.

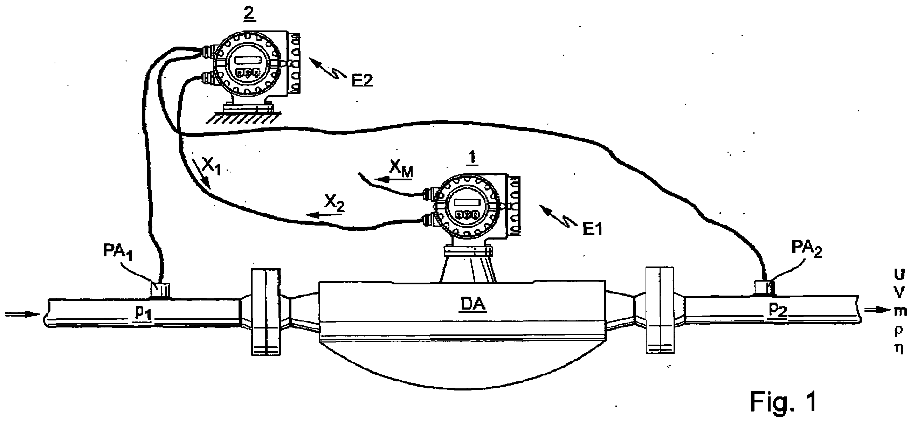

In Fig. 1, 2 und 3 Ist jeweils ein Ausführungsbeispiel für ein, insb. diversitär und/oder modular aufgebautes, Meßsystem dargestellt, das dafür geeignet und dafür vorgesehen ist, wenigstens einen physikalischen Strömungsparameter, insb, einen Massendurchfluß m und/oder Volumendurchfluß v und/oder eine Strömungsgeschwindigkeit u, eines in einer - hier nicht dargestellten - Rohrleitung strömenden Mediums, beispielsweise einer Flüssigkeit, einem Gas, einem Dampf oder dergleichen, sehr robust zu messen und in wenigstens einen entsprechenden Messwert $X_M$ abzubilden. Im besonderen ist das Meßsystem ferner dafür vorgesehen, einen oder mehrere solcher physikalischen Strömungsparameter von einem zumindest zeitweise zwei- oder mehrphasigen Medium zu messen. Das Meßsystem umfaßt dafür wenigstens ein In-Line-Meßgerät 1 für strömende Medien, das mittels eines entsprechenden Durchflußaufnehmers DA sowie einer mit diesem zumindest zeitweise elektrisch gekoppelte erste Meßgerät-Elektronik E1 des Meßsystems gebildet ist. Der Durchflußaufnehmer DA weist hierbei wenigstens ein In den Verlauf der Rohrleitung eingesetztes Meßrohr auf, durch das im Betrieb des Meßsystems zumindest zeitweise das zu messenden Medium hindurch strömen gelassen wird. Das In-Line-Meßgerät 1 ist im besonderen dafür vorgesehen, zumindest zeitweise wenigstens ein Meßsignal zu erzeugen, das von wenigstens einem physikalischen Parameter, insb. einer Strömungsgeschwindigkeit, einem Massendurchfluß $m$, einem Volumendurchfluß $v$, einer Dichte $p$ und/oder einer Viskosität $\eta$, des im Meßrohr befindlichen Mediums beeinflußt ist und insoweit mit dem Parameter entsprechend korrespondiert. Zum Erzeugen des wenigstens einen Meßsignals dient hierbei eine am Meßrohr und/oder in dessen Nähe angeordnete Sensoranordnung des In-Line-Meßgeräts, die zumindest mittelbar auf Änderungen des wenigstens einen physikalischen Parameters des Mediums in einer das wenigstens eine Meßsignal entsprechend beeinflussenden Weise reagiert.

Im hier gezeigten Ausführungsbelspiel dient ein Coriolis-Massandurchfluß-/ Dichte- und/oder Viskositätsmesser, bei dem der Durchflußaufnehmer DA als Messaufnehmer vom Vibrationstyp ausgebildet Ist, als In-Line-Meßgerät. Dies im besonderen deshalb, weil ein solches In-Line-Meßgerät, zumindest für den Fall, daß das Medium einphasig oder in nur sehr geringem Maße zwei- oder mehrphasig ausgebildet ist, besonders dafür geeignet ist, den physkalische Parameter, insb. den Massendurchfluß $m$, die Dichte $\rho$ und/oder die Viskosität $\eta$, des zu messenden Mediums hochgenau zu erfassen. Allerdings können hierbei auch andere, in der Prozeßautomatisierungstechnik gleichermaßen etablierte In-Line-Meßgeräte zum Ermitteln des physikalischen Parameter verwendet werden, wie z.B. magnetisch-Induktive Durchflußmesser, Vortex-Durchflußmeßgeräte oder auch Ultraschall-Durchflußmeßgeräte.

Neben dem - hier als Coriolis-Massendmahfluß-/Dichte-Meßgerät ausgebildeten - In-Line-Meßgerät 1 umfaßt das Meßsystem ferner ein Differenzdruck-Meßgerät 2, das mittels eines ersten Druckaufnehmers $PA_1$ zum Erfassen eines im Medium herrschenden, insb. statischen, ersten Drucks $p_1$ und eines, insb. statischen, zweiten Druckaufnehmer $PA_2$ zum Erfassen eines im Medium herrschenden zweiten Drucks $p_2$ sowie mittels einer zweiten Meßgerät-Elektronik E2 gebildet ist, die zumindest zeitweise mit den Druckaufnehmern $PA_1$, $PA_2$ und zumindest zeitweise mit der - hier primär dem In-Line-Meßgerät zugeordneten - Meßgerät-Elektronik E1 elektrisch gekoppelt ist.

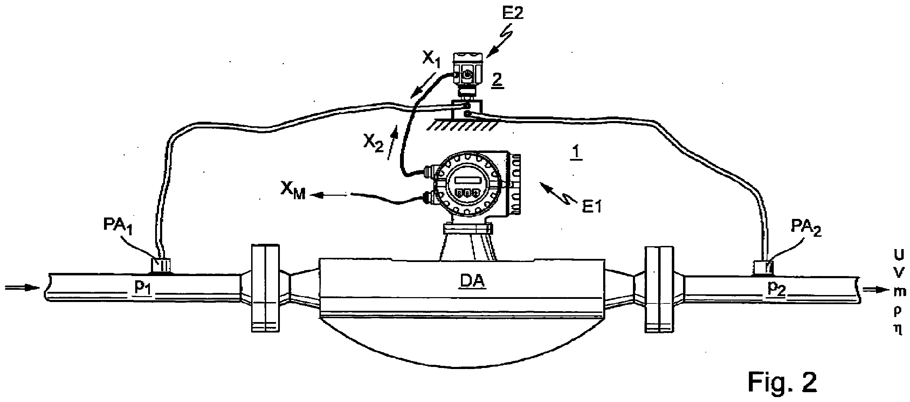

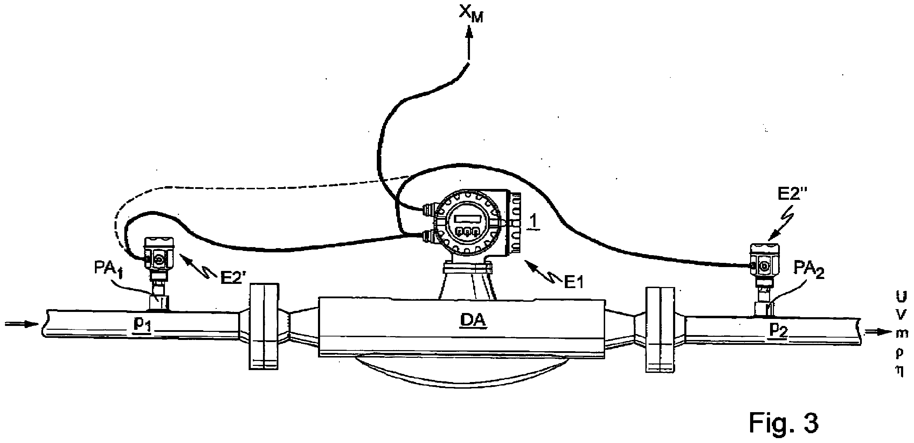

Nach einer Ausgestaltung der Erfindung sind, wie z.B. in Fig. 1 gezeigt, der erste Druckaufnehmer $PA_1$ einlaßseitig des Durchflussaufnehmers DA, insb. in dessen unmittelbarer Nähe, in die Rohrleitung eingesetzt, und der zweite Druckaufnehmer $PA_2$ auslaßseitig des Durchflussaufnehmers DA, insb. in dessen unmittelbarer Nähe, in die Rohrleitung eingesetzt. Somit erfaßt also das Meßsystem mittels des ersten Druckaufnehmers $PA_1$ wenigstens einen einlaßseitig des wenigstens einen Meßrohrs Im strömenden Medium wirksamen Drucks $p_2$ und/oder mittels des zweiten Druckaufnehmers $PA_2$ wenigstens eines auslaßseitig des wenigstens einen Meßrohrs im strömenden Medium wirksamen Drucks $p_2$. Bei den Druckaufnehmern $PA_1$. $PA_2$ kann es sich, wie auch in Fig. 1 dargestellt, beispielsweise um den Druck vor Ort, also mittels jeweils einer unmittelbar an der Rohrleitung angeordneten Druckmeßzelle, In jeweils ein elektrisches, auf zeitliche Änderungen wenigstens eines der erfaßten Drücke mit einer korrespondierenden Veränderung wenigstens einer seiner Eigenschaften reagierendes Meßsignal umsetzende Druckaufnehmer handeln; es können aber beispielsweise auch, wie in Fig. 2 schematisiert dargestellt, solche Druckaufnehmer verwendet werden, die die erfaßten Drücke zunächst über einen entsprechenden Druckmittler, beispielsweise eine entsprechend kanaliserte Ölvorlage, an eine, insb. differentiell messende, Druckmeßzelle und/oder auche mehrere in der Nähe der zweiten Meßgerät-Elektronik E2 angeordnete Druckmeßzellen überträgt, die dann entsprechende elektrische Meßsignale für die erfaßten Drücke erzeugen. Ein auf diese Weise erzeugtes Messsignale würde dann praktisch direkt eine Druckdifferenz im strömenden Medium repräsentieren. Ein weitere Möglichkeit zur Realisierung des Differenzdruck-Meßgerät 2 besteht, wie in der Fig. 3 schematisert dargestelit und wie beispielsweise auch in der US-A 2004/0254748 vorgeschlagen, ferner darin, die Drücke p1, p2 mit jeweils einem entsprechenden Drucksensor zu erfassen und jeden der der örtlich erfaßten Drücke p1, p2 bereits unmittelbar vor Ort in entsprechende, die Drücke p1, p2 repräsentierende Druckmeßwerte umzuwandeln. Die so erzeugten Druckmeßwerte können dann, wie in Fig. 3 gezeigt, beispielsweise einzel über entsprechende Datenschnittstellen vom Jeweiligen Drucksensor - hier also praktisch jeweils von einer Teil-Meßgerät-Elektronik E2' bzw. E2", -zur Meßgerät-Elektronik E1 übertragen werden. Die Druckmeßwerte können aber beispielsweise auch, wie in Fig. 3 mit der gestrichelten Linie angedeutet, von einem Drucksensor zum anderen - hier also praktisch von einer Teil-Meßgerät-Elektronik E2' zur anderen Teil-Meßgerät-Elektronik E2" - übertragen und von dort weiter zur Meßgerät-Elektronik E1 geleitet werden, ggf, bereits als "elektrische" Druckdifferenz.

Bei den für die Druckaufnehmer $PA_1$, $PA_2$ verwendeten Druckmeßzelle kann es sich ferner beispielsweise um kapazitiv messenden Meßzellen handeln. Selbstverständlich können aber auch, falls erforderlich, andere die vom Medium erfaßten und übertragenen Drücke in entsprechende Meßsignale umwandelnde Druckmeßzellen für die Druckaufnehmer verwendet werden. Im übrigen sei hierzu auch auf die in Differanzdruck-Meßgeräte der Durchflußmeßtechnik herkömmlicher Welse verwendeten Druckaufnehmer, insb. auch den Aufbau und die Anbindung von deren Druckmeßzellen an die Rohrleitung sowie die strömungstechnische und elektrische Verschaltung der Druckmeßzellen, verwiesen.

Beim erfindungsgemäßen Meßsystem sind die beiden Meßgerät-Elektroniken E1, E2 so miteinander gekoppelt, daß Im Betrieb von wenigstens einer der beiden Meßgerät-Elektroniken E1, E2 entsprechend erzeugte Meßdaten zumindest unidirektional zur anderen übertragen werden können, beispielsweise inform von in ihrer Spannung, ihrem Strom und/oder Ihrere Frequenz codierten Meßsignalen und/oder inform von in digital codierte Telegramme gekapselten Meßwerte; selbstverständlich können statt dessen auch bidirektional zwischen den beiden Meßgerät-Elektronik E1, E2 kommunizierende Datenverbindungen verwendet werden. Zur Realisierung der Kommuniukationsverbindung zwischen den beiden Meßgerät-Elektronik können in vorteilhafter Weise in der industriellen Meß- und Automatisierungstechnik entsprechend etablierte Standardschnittstellen, wie z.B. leitungsgeführte 4-20 mA-Stromsehlefen, ggf. auch in Verbindung mit HART®-Protokolien, und/oder geeignete Funkverbindungen, zum Einsatz kommen. Darüber hinaus ist jedes der beiden Meßgeräte - also das In-Line-Meßgerät und das Differenzdruck-Meßgerät - über seine zugehörige Messgerät-Elektronik E1 bzw. E2 zumindest mittelbar an eine externe Energieversorgung angeschlossen von der es im Betrieb mit elektrischer Energie gespeist werden kann. Dabei kann beispielsweise jede der beiden Messgerät-Elektroniken E1, E2 separat an die externe Energieversorgung angeschlossen sein. Alternativ oder in Ergänzung kann aber auch eine der beiden Meßgerät-Elektroniken E1, E2 so an die jeweils andere angeschlossen sein, daß sie diese zumindest zeitweise mit elektrischer Energie versorgen kann.

Gemäß einer vorteilhaften Ausgestaltung der Erfindung ist wenigstens eine der beiden Messgerät-Elektroniken E1, E2 ferner so ausgelegt, daß sie im Betrieb das Meßsystem mit einer diesem übergeordneten Messwertverarbeitungseinheit, beispielsweise einer speicherprogrammierbaren Steuerung (SPS), einem Personalcomputer und/oder einer Workstation, via Datenübertragungssystem, beipielswelse einem Feldbussystem, Meß- und/oder andere Betriebsdaten, insb. auch den wenigstens einen Messwert $X_M$, austauschen kann. Für diesen vorgenannten Fall, daß das Meßsystem für eine Ankopplung an ein Feldbus- oder ein anderes Kommunikationssystem vorgesehen ist, weist zumindest die wenigstens eine an das Kommunikationssystem angeschlossene Meßgerät-Elektronik eine entsprechende Kommunikations-Schnittstelle für eine Datenkommunikation auf, z.B. zum Senden der Meßdaten an die bereits erwähnte speicherprogrammierbare Steuerung oder ein übergeordnetes Prozeßleltsystem, auf, Auch hierfür können In beispielsweise in der industriellen Meß- und Automatisierungstechnik entsprechend etablierte Standardschnittstellen zum Einsatz kommen. Von Darüber hinaus kann auch die externe Energieversorgung an das Feldbussystem angeschlossen sein und das Meßsystem in der vorbeschriebenen Weise direkt via Feldbussystem mit Energie versorgen.

Im Betrieb erzeugt das Meßsystem mittels wenigstens einer der beiden Meßgerät-Elektroniken E1, E2 unter Berücksichtigung von mittels des ersten und zweiten Druckaufnehmers erfaßten Drücken $p_1$, $p_2$ zumindest zeitweise

Meßwerte $X_1$ erster Art, die den wenigstens einen zu messenden Strömungsparameter des Mediums zeitlich aufeinander folgend, insb. digital, repräsentieren, Zu diesem Zweck ist In wenigstens einer der Meßgerät-Elektroniken E1, E2, beispielsweise in der des Differenzdruck-Meßgeräts, eine Übertragungsfunktion $f(p_1, p_2,..)$ gespeichert, die zumindest bestimmt, wie die Meßwerte $X_1$ erster Art anhand des aktuell erfaßten ersten und zweiten Drucks $p_1, p_2$ mittels dieser Meßgerät-Elektronik generiert werden, d.h. es soll zumindest gelten:

$$X_1 = f(p_1, p_2).$$ (1)

Bei der für die Erzeugung der Meßwerte erster Art verwendeten Übertragungsfunktion $f(p_1, p_2,..)$ kann es sich beispielsweise um eine rein statische, lineare oder nichtlineare, Kennlinienfunktion oder auch um eine transiente Übergangsvorgänge berücksichtigende dynamische Übertragungsfunktion handeln. Die Übertragungsfunktion $f(p_1, p_2,..)$ kann beispielsweise mittels eines Ensembles diskreter numerischer Stützstellenwerte für ein ein- oder mehrdimensionales Kennfeld realisiert sein, das vorab bei einem entsprechenden Kalibrieren des Meßsystems bestimmt und in einem, insb. nicht-flüchtigen, Speicherelement einer der Meßgerät-Elektroniken digital gespeichert worden ist. Die Übertragungsfunktion $f(p_1, p_2,..)$ kann aber auch durch ein Satz von diese parametrisch beschreibenden Koeffizienten gebildet sein, die gleichermaßen vorab beim Kalibrieren ermittelt und entsprechend im Speicher digitalisiert gespeichert worden sind. Für den Fall einer linearen statischen Kennlinienfunktion, würde es sich bel den dann lediglich zwei Koeffizienten beispielsweise um die bekannten Größen Nullpunkt und Empfindlichkeit oder Steilheit handeln.

Nach einer Ausgestaltung des Erfindung ermittelt das Meßsystems, basierend auf den mittels des Differenzdruck-Meßgeräts erfaßten Drücken $p_1, p_2$ wiederkehrend eine Druckdifferenz $\Delta p$, die zumindest anteilig entlang des wenigstens einen Meßrohrs im strömenden Medium herrscht. Ferner erzeugt das Meßsystem die Meßwerte $X_1$ erster Art unter Berücksichtigung einer aktuell für das strömende Medium ermittelten Druckdifferenz, die zwischen den beiden erfaßten Drücke $p_1, p_2$ besteht. Demgemäß ermittelt das Meßsystem bei dieser Ausgestaltung der Erfindung die Meßwerte $X_1$ erster Art also basierend der Beziehung:

$$X_1 = f((\Delta p)^n),$$ (2)

worin der Exponent etwa Im Bereich 0,5 liegt. Für den Fall, daß es sich bei dem mittels des Meßsystems zu ermiteinden physikalischen Strömungsparameter um einen Massendurchfluß $m$, einen Volumendurchfluß $v$ oder eine mittlere Strömungsgeschwindigkeit $u$ handelt, werden die Meßwerte $X_1$ erster Art beispielsweise basierend auf wenigstens einer der folgenden Gleichungen erzeugt:

$$X_1 = K_u \cdot (\Delta p)^n,$$ (3)

$$X_1 = K_v \cdot (\Delta p)^n,$$ (4)

$$X_1 = K_m \cdot (\Delta p)^n,$$ (5)

worin die Koeffizienten $K_u$, $K_v$ oder $K_m$ zwischen dem jeweils zu messenden Strömungsparameter - Massendurchfluß $m$, Volumendurchfluß $v$ oder mittlere Strömungsgeschwindigkeit $u$ - und einer anhand der beiden Drücke $p_1, p_2$ gemessen Druckdifferenz vermittelt. Die Koeffizienten $K_u$, $K_v$ oder $K_m$ können dabei im übrigen auch von der momentanen Dichte $p$ des Mediums abhängig sein und sind insofern nur für Medien mit in geringem Maße schwankender Dichte Konstanten. Für Medien mit in weiten Bereichen schwankende Dichten ist die jeweilige Abhängigkeit der Koeffizienten von der Dichte $p$ gemäß den folgenden Proportionalitäten entsprechend zu berücksichtigen:

$$K_u \sim \sqrt{\frac{1}{\rho}}$$ (6)

$$K_v \sim \sqrt{\frac{1}{\rho}} \qquad\qquad (7)$$

$$K_u \sim \sqrt{\rho}. \qquad\qquad (8)$$

Die vorgenannten, dem Erzeugen der Meßwerte $X_1$ erster Art bzw. der Meßwerte $X_2$ zweiter Art dienenden Funktionen, symbolisiert durch die Gl. (1) bis (8), können zumindest teilweise mittels eines in der zweiten Meßgerät-Elektronik entsprechend vorgesehenen Mikrocomputers realisiert sein. Das Erstellen und Implementieren von entsprechenden Algorithmen, die mit den vorbeschriebenen Gleichungen korrespondierenden oder nachbilden, sowie deren Übersetzung in ausführbare Programm-Codes ist dem Fachmann an und für sich geläufig und bedarf daher -Jedenfalls in Kenntnis der vorliegenden Erfindung - keiner detailierteren Erläuterung. Selbstverständlich können vorgenannte Gleichungen auch ohne weiteres ganz oder teilweise mittels entsprechender diskret aufgebauter analoger und/oder digitaler Rechenschaltungen in wenigstens einer der beiden Meßgerät-Elektronik E1, E2 dargestellt werden.

Beim erfindungsgemäßen Meßsystem ist ferner vorgesehen, daß die Meßgerät-Elektronik E1 des In-Line-Meßgeräts 1 zumindest zeitweise Meßwerte $X_2$ zweiter Art erzeugt, die den wenigstens einen Parameter des Mediums im wenigstens einen Meßrohr oder eine davon abgeleitete Meßgröße des Mediums zeitlich aufeinanderfolgend, insb. digital, repräsentieren. Die Messwerte $X_1$ erster Art und die Meßwerte $X_2$ zweiter Art können dabei im wesentlichen simultan oder zumindest zueinander zeitnah, und insoweit miteinander synchronisiert erzeugt werden; die Meßwerte erster Art und zweiter Art können aber auch, falls erforderlich, im wesentlichen asynchron und/oder zueinander zeitlich versetzt erzeugt werden, ggf. unter Verwendung von den Zeitpunkt der eigentlichen Ermittlung entsprechend kennzeichnenden Zeitstempeln. Ferner repräsentieren die Meßwerte $X_1$ erster Art denselben Parameter wie die Meßwerte $X_2$ zweiter Art, insb. auch In derselben Dimension oder Maßeinheit

Des weiteren ist beim erfindungsgemäßen Meßsystem vorgesehen, daß die Übertragungsfunktion $f(p_1, p_2,..)$ unter Berücksichtigung wenigstens eines mittels des In-Line-Meßgeräts 1 erzeugten Meßwerts $X_2$ zweiter Art, beispielsweise dem jeweils aktuellen, wiederkehrend an das zu messende Medium und den wenigstens einen mittel des In-Line-Meßgeräts gemessenen physikalischen Parameter, beispielsweise die Dichte $p$ des Mediums und/oder dessen Massen- oder Volumendurchflusses $m, v$, angepaßt wird. Anpassen kann dabei beispielsweise bedeuten, daß basierend auf wenigstens einem Meßwert zweiter Art $X_2$, beispielsweise dem aktuellen, aus einer Vielzahl verschiedener Übertragungsfunktionen, von denen jede in der vorbesehriebenen Weise realisiert ist, z.B. mittels digital, nicht-flüchtig gespeicherter Koeffizienten oder digital, nicht-flüchtig gespeicherter Stützstellenwerte, und von denen jede an jeweils wenigstens eine vorab zugeordnete und insofern klassifizierte Ausprägung des wenigstens einen mittels des In-Line-Meßgeräts zu messenden Parameters angepaßt ist, diejenige Übertragungsfunktion ausgewählt wird, die für diesen Meßwert $X_2$ zweiter Art oder einer Konstellation mehrerer solcher vom In-Line-Meßgerät gelieferten Meßwert $X_2$ zweiter Art am besten geeignet ist. Anpassen der Übertragungsfunktion kann aber auch bedeuten, daß der mittels des In-Line-Meßgeräts gelieferte Meßwert $X_2$ zweiter Art einen der Strömungsparamter Massendurchfluß $m$, Volumendurchfluß $v$ oder mittlere Strömungsgeschwindigkeit u repräsentiert, und daß unter Verwendung dieses Meßwerts $X_2$ sowie unter Berücksichtigung einer aktuellen Dichte $p$ des Mediums die jeweils eine zwischen dem aktuell zu bestimmenden Meßwert $X_1$ erster und dem Meßwert $X_2$ zweiter Art, der den tatsächlichen Parameter momentan am genauesten repräsentiert, entsprechend vermittelnde Konstante $K_u$, $K_v$ oder $K_m$ wiederkeherend bestimmt und ggf. korrigiert wird.

Die aktuell am besten geeignete - hier also die "angepasste" - Übertragungsfunktion kann dann schließlich aus einem z.B. als Tabellenspeicher ausgebildeten nicht-flüchtigen Speicherbereich in einer der beiden Meßgerät-Elektroniken E1, E2 in einen flüchtigen Arbeitsspeicher der Meßgerät-Elektronik E2 des Differenzdruck-Meßgeräts 2 geladen und somit für die Ermittlung der folgenden Meßwerte $X_1$ erster Art als aktualisierte Übertragungsfunktion verfügbar gehalten werden. In vorteilhafter Weise ist dafür wenigstens diejenige der beiden Meßgerät-Elektroniken, die die Übertragungsfunktion speichert, als programmierbare, insb. auch als im Betrieb reprogrammierbare und insoweit rekonfigurierbare oder adaptierbare, Meßgerät-Elektronik ausgebildet. Als nicht-flüchtiger Speicher kann beispielsweise ein programmierbarer Festwertspeicher, also ein FPGA (field programmable gate array), ein EPROM oder ein EEPROM, dienen. Die Verwendung von als Tabellenspeicher ausgebildeten Speicherelementen hat u.a. den Vorteil, daß die Übertragungsfunktion nach der Berechnung der Messwerte $X_2$ zweiter Art zur Laufzeit sehr rasch zur Verfügung steht. Zu dem können die in den Tabellenspeicher eingetragenen Übertragungsfunktionen anhand von wenigen Kalibriermessungen vorab oder sogar im Betrieb des Meßsystems sehr genau, z.B. basierend auf den Gln. (3) bis (8) und unter Anwendung der Methode der kleinsten Fehlerquadrate, ermittelt werden. Falls erforderlich, kann das Anpassen der Übertragungsfunktion an das zu messende Medium auch dadurch erfolgen, daß das wenigstens einen mittels der Sensoranordnung des In-Line-Meßgeräts 1 erzeugte Meßsignal direkt an die Meßgerät-Elektronik E2 des Differenzdruck-Meßgeräts 2 übertragen wird und dort in ein die aktuell am besten geeignete Übertragungsfunktion, beispielsweise einen diese beschreibenden Koeffizienten, selektierendes Auswahlsignal gewandelt wird.

Der für das Anpassen der Übertragungsfunktion erforderliche Informationsaustausch zwischen den beiden Meßgerät-Elektroniken E1, E2 kann dabei über die oben bereits erwähnten Datenverbindungen des Meßsystems mit den in den Meßgerät-Elektroniken E1, E2 entsprechend vorgesehenen Kommunikationsschnittstellen erfolgen.

Wie bereits angedeutet, umfasst das In-Line-Meßgerät Im hier gezeigten Ausführungsbeispiel einen Meßaufnehmer vom Vibrationstyp, der Im Betrieb vom zu messenden Medium durchströmt ist, und der dazu dient, in einem hindurchströmenden Medium solche mechanische Reaktionskräfte, insb. vom Massendurchfluß abhängige Corloliskräfte, von der Mediumsdichte abhängige Trägheitskräfte und/oder von der Mediumsviskosität abhängige Reibungskräfte, zu erzeugen, die meßbar, insb. sensorisch erfaßbar, auf den Meßaufnehmer zurückwirken. Abgeleitet von diesen das Medium beschreibenden Reaktionskräften können so in der dem Fachmann bekannten Weise z.B. der Massendurchfluß, die Dichte und/oder die Viskosität des Mediums gemessen werden. Insoweit entspricht der mechanische Aufbau des Meßsystems im wesentlichen dem des in der US-A 53 59 881 gezeigten Meßsystems.

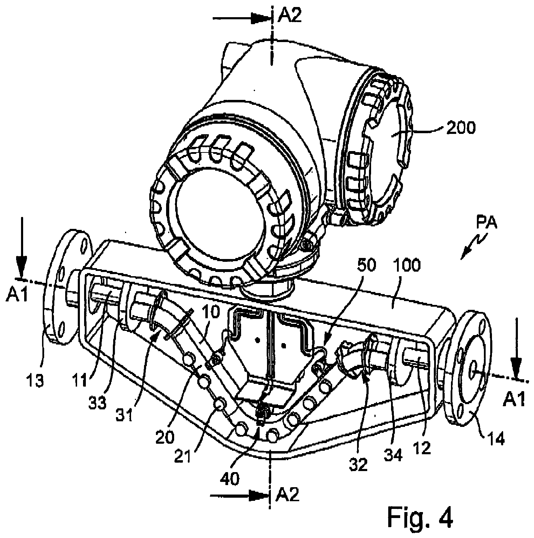

In der Fig. 4 ist ein Ausführungsbeispiel einer als Messaufnehmer 10 vom Vibrations-Typ gezeigt dienenden physikalisch-elektrischen Wandleranordnung schematisch dargestellt. Der mechanische Aufbau und die Funktionsweise einer derartigen Wandleranordnung ist dem Fachmann an und für sich bekannt und z.B. auch in der US-B 68 60 158, der US-A 57 96 011 oder der US-A 53 59 881 detailiert beschrieben. Es sei an dieser Stelle ferner darauf verwiesen, daß zur Realisierung der Erfindung anstelle eines Meßaufnehmers gemäß dem hier gezeigten Ausführungsbeispiel praktisch jeder der dem Fachmann bereits für Coriolis-Massedurchfluß-/ Dichtemeßgeräte bekannten Meßaufnehmer, insb. auch ein solcher vom Biegeschwingungstyp mit ausschließlich oder zumindest anteilig in einem Biegeschwingungsmode vibrierendem, gebogenem oder geradem Meßrohr, verwendet werden kann. Weitere geeignete Ausführungsformen für solche als Meßaufnehmer 10 dienende Wandleranordnungen sind z.B. in der US-B 66 91 583, der US-B 63 08 580, der US-A 53 01 557, der US-A 53 57 811, der US-A 66 67 973, der US-A 56 02 345. der US-A 56 48 616, WO-A 03/095949 oder der WO-A 03/095950 ausführlich und detailliert beschrieben, deren Offenbarung daher als zur Offenbarung dieser Anmeldung zugehörig erachtet wird. Darüberhinaus können z.B. auch dem Fachmann bekannte magnetisch-induktive Meßaufnehmer oder auch Ultraschall-Meßaufnehmer verwendet werden.

Zum Führen des zu messenden Fluids umfaßt Meßaufnehmer ein - hier einziges - gekrümmtes Meßrohr 10, das über ein einlaßseitig mündendes Einlaßrohrstück 11 und über ein auslaßseitig mündendes Auslaßrohrstück 12 an die Rohrleitung oder auch allfällige Trägerrohre der vorgenannten Druckaufnehmer angeschlossen ist. Einlaß- und Auslaßrohrstück 11, 12 sind, zueinander sowie zu einer gedachten Längsachse $A_1$ des Meßaufnehmers möglichst fluchtend ausgerichtet. Darüberhinaus sind Meßrohr, Einlaß- und Auslaßrohrstück 11, 12 in vorteilhafter Weise einstückig ausgeführt, so daß zu deren Herstellung z.B. ein einziges rohrförmiges Halbzeug dienen kann; falls erforderlich können das Meßrohr 10 sowie das Einlaß- und das Auslaßrohrstück 11, 12 aber auch mittels einzelner, nachträglich zusammengefügter, z.B. zusammengeschweißter, Halbzeuge hergestellt werden. Zur Herstellung des Meßrohrs 10 kann hierbei praktisch jedes der für solche Meßwandier üblichen Materialien, wie z.B. Stahl, Hastelloy, Titan, Zirkonium, Tantal etc., verwendet werden. Es sei an dieser Stelle darauf verwiesen, daß anstelle des im Ausführungsbeispiel gezeigten Messaufnehmers mit einzigen gekrümmten - hier eher U- oder V-förmigen - Meßrohr, der der Realisierung der Erfindung dienenende Meßaufnehmr gleichwohl aus einer Vielzahl von aus dem Stand der Technik bekannten Messaufnehmern vom Vibrationstyp ausgewählt werden kann. im besonderen eigenen sich beispielsweise auch Meßaufnehmer vom Vibrationstyp mit zwei parallel vom zu messenden Medium durchflossenen, beispielsweise zueinander im wesentlichen parallel verlaufenden und/oder im wesentlichen baugleichen, geraden oder gebogenen Meßrohren, wie sie beispielsweise auch in der US-A 56 02 345 beschrieben sind, oder auch solche mit einem einzigen geraden Meßrohr, vgl. hierzu beispielsweise auch die US-B 68 40 109 oder die die US-B 60 06 609.

Für den Fall, daß der Meßaufnehmer lösbar mit der Rohrleitung zu montieren ist, kann dem Einlaßrohrstück 11 und dem Auslaßrohrstück 12 in der üblichen Welse jeweils ein erster bzw. zweiter Flansch 13, 14 angeformt; falls erforderlich können Ein- und Auslaßrohrstück 11, 12 aber auch direkt mit der Rohrleitung, z.B. mittels Schweißen oder Hartlötung, verbunden werden.

Ferner Ist, wie In den Fig. 4 schematisch dargestellt, am ein Ein- und am Auslaßrohrstück 11, 12 fixiertes, das Meßrohr 10 aufnehmendes Wandlergehäuse 100 vorgesehen, das im Vergleich zum Meßrohr eher biege- und torsionssteif ausgebildet ist. Neben dem schwingfähigen Haltern des Meßrohrs dient das Meßaufnehmer-Gehäuse 100 dazu das Meßrohr 10 sowie allfällige weitere Komponenten des Messaufnehmers einzuhausen und diese somit vor schädlichen Umgebungseinflüssen zu schützen und/oder allfällige Schallemissionen des Meßaufnehmers nach außen hin zu dämpfen. Überdies dient das Meßaufnehmer-Gehäuse 100 ferner auch dazu ein die Meßgerät-Elektronik 50 einhausendes Elektronik-Gehäuse 200 entsprechend zu haltern. Hierzu ist das Meßaufnehmer-Gehäuse 100 mit einem halsartigen Übergangsstück versehen, an dem das Elektronik-Gehäuse 200 entsprechend fixiert Ist. Anstelle des hier gezeigten eher kastenförmigen Wandlerghäuses 100 können selbstverständlich auch andere, auf die jeweilige Form des tatsächlich verwendeten Meßrohrs abgestimmte geeignete Gehäuseformen, wie z.B. rohrförmigen, koaxial zum Messrohr verlaufenden Strukturen, verwendete werden.

Wie in der Fig. 4 dargestellt, umfaßt der Meßaufnehmer des Ausführungsbeispiels weiters einen Gegenschwinger 20 für das Meßrohr 10, der mittels eines einlaßseitgen ersten Kopplers 31 an einem Einlaßende des Meßrohrs 10 und und mittels eines auslaßseitigen, insb. zum Koppler 31 identisch geformten, zweiten Kopplers 32 an einem Auslaßende des Meßrohrs 10 schwingfähig fixiert ist. Als Koppler 31 können hierbei z.B. eine oder, wie auch In der Fig. 4 gezeigt, zwei Knotenplatten dienen, die In entsprechender Weise einlaßseitig jeweils an Meßrohr 10 und Gegenschwinger 20 befestigt sind; analog dazu kann auch der Koppler 32 mittels auslaßseltig jeweils an Meßrohr 10 und Gegenschwinger 20 befestigten Knotenplatten realisiert werden. Der hier ebenfalls rohrförmige Gegenschwinger 20 Ist vom Meßrohr 10 beabstandet und zu diesem im wesentlichen parallel ausgerichtet im Meßwandier angeordnet. Meßrohr 10 und Gegenschwinger 20 können dabei so ausgeführt sein, daß sie bei einer möglichst identischen äußeren Raumform gleiche oder zumindest einander ähnliche, insb. zueinander proportionale, Massenverteilungen aufweisen. Es kann aber auch von Vorteil sein, den Gegenschwinger 20 nicht-identisch zum Meßrohr 10 zu formen; z.B. kann der Gegenschwinger 20 auch, falls erforderlich, koaxial zum Meßrohr 10 verlaufend im Meßwandler angeordnet sein.

Zum Erzeugen oben genannter Reaktionskräfte im Fluid wird das Meßrohr 13 im Betrieb des Meßaufnehmers 10, angetrieben von einer mit dem Meßrohr 10 gekoppelten elektro-mechanischen Erregeranordnung 40, bei einer vorgebbaren Erregerfrequenz $f_{exc}$, insb. einer natürlichen Resonanzfrequenz, im sogenannten Nutzmode vibrieren gelassen und somit In vorgebbarer Weise elastisch verformt. Im vorliegenden Ausführungsbeispiel wird das Messrohr 10, wie bei derartigen Meßwandlern vom Vibrations-Typ üblich, im Nutzmode zu Auslegerschwingungen so angeregt, daß es sich, um mit dem Einlaßrohrstück 11 und dem Auslaßrohrstück 12 im wesentlichen fluchtende gedachte Längsachse $A_1$ des Meßaufnehmers pendeind, zumindest anteilig auslegerartige Biegeschwingungen um diese gedachte Längsachse $A_1$ ausführt. Gleichzeitig wird auch der Gegenschwinger 20 zu Auslegerschwingungen angeregt, und zwar so, daß er, zumindest bei ruhendem Medium, Im wesentlichen gleichförmig, jedoch gegenphasig zum im Nutzmode schwingenden Meßrohr 10 oszilliert. Anders gesagt, Meßrohr 10 und Gegenschwinger 20 bewegen sich dann nach der Art von schwingenden Stimmgabelzinken.

Für den Fall, daß dabei Medium strömt und somit der Massendurchfluß m von Null verschieden ist, werden mittels des im Nutzmode schwingenden Meßrohrs 10 im hindurchströmenden Medium Corioliskräfte induziert. Diese wiederum wirken auf das Meßrohr 10 zurück und bewirken so in der dem Fachmann bekannten Weise eine zusätzliche, sensorisch erfaßbare Verformung des Meßrohrs 10, die den Biegeschwingungen des Nutzmodes inform eines sogenannten Coriolis-Modes überlagert sind. Die momentane Ausprägung der Verformungen des Meßrohrs 10 Ist dabei, Insb. hinsichtlich Ihrer Amplituden, auch vom momentanen Massendurchfluß m abhängig und wird mittels einer entsprechenden am Meßrohr angeordneten Sensoranordnung erfaßt. Im vorliegenden Ausführungsbeispiel ist der Corioils-Mode, wie bei deratigen Meßwandlern üblich, als ein antisymmetrischer Twistmode ausgebildet, in dem das Meßrohr 10 auch Drehschwingungen um eine senkrecht zur Längsachse $A_1$ ausgerichteten, gedachten Hochachse $A_2$ ausführt.

Nach einer Ausgestaltung der Erfindung, ist die Erreger- oder auch Nutzmodefrequenz $f_{exc}$ dabei so eingestellt, daß sie möglichst genau einer, insb. niedrigsten, natürlichen Eigenfrequenz des Meßrohrs 10 entspricht, so daß sich das Meßrohr im wesentlichen gemäß einer natürlichen Eigenschwingungsform ausbiegt. Bei einer Verwendung eines aus Edelstahl gefertigten Meßrohrs mit einer Nennweite von 29 mm, einer Wandstärke von etwa 1,5 mm, einer gestreckten Länge von etwa 420 mm und einer gesehnten Länge von 305 mm gemessen vom Einlaß- zum Auslaßende ist, würde die niedrigste Resonanzfrequenz deselben beispielsweise bei einer Dichte von Null in etwa 490 Hz betragen. Da da natürliche Eigenfrequenzen solcher Biegeschwingungsmoden von Meßrohren bekanntlich in besonderem Maße auch von der Dichte $p$ des Mediums abhängig sind, kann mittels des In-Line-Meßgerät ohne weiteres zusätzlich zum Massedurchfluß m auch die Dichte $p$ gemessen werden.

Zum Erzeugen von Vibrationen des Meßrohrs 10 umfaßt der Meßaufnehmer, wie bereits erwähnt, ferner eine am wenigstens einen Meßrohr angeordnete und zumindest mittelbar auf das darin geführte Medium einwirkende elektrophysikalischen -hier elektrodynamische - Erregeranordnung 40. Diese dient dazu, eine von einer Meß- und Betriebselektronik 50 der Meßgerät-Elektronik E1 eingespeiste elektrische Erregerenergie $E_{exc}$, z.B. mit einem geregelten Strom und/oder einer geregelten Spannung, In eine auf das Meßrohr 10, z.B. pulsförmig oder harmonisch, einwirkende und dieses in der vorbeschriebenen Weise auslenkende Erregerkraft $F_{exc}$ umzuwandeln. Von der erwähnten Meß- und Betriebselektronik 50 ist in Fig. 7 ein entsprechendes Ausführunsgbelspiel gezeigt. Für das Einstellen der Erregerenergie $E_{exc}$ geeignete Treiberschaltungen sind z.B. in der US-A 47 77 833, der US-A 48 01 897, der 48 79 911 oder der US-A 50 09 109 gezeigt. Die Erregerkraft $F_{axe}$ kann, wie bei derartigen Meßwandiern üblich, bidirektional oder unidirektional ausgebildet sein und in der dem Fachmann bekannten Weise z.B. mittels einer Strom-und/oder Spannungs-Regelschaltung, hinsichtlich Ihrer Amplitude und, z.B. mittels einer Phasen-Regelschleife, hinsichtlich ihrer Frequenz eingestellt werden. Als Erregeranordnung 40 kann z.B. eine einfache Tauchspulenanordnung mit einer am Gegenschwinger 20 befestigten zylindrischen Erregerspule, die im Betrieb von einem entsprechenden Erregerstrom durchflossen Ist, und einem in die Erregerspule zumindest teilweise eintauchenden dauermagnetischen Anker dienen, der von außen, insb. mittig, am Meßrohr 10 fixiert ist. Ferner kann als Erregeranordnung 40 z.B. auch ein Elektromagnet dienen.

Zum Detektieren und Erfassen von Vibrationen, insb. Biegeschwingungen, des Meßrohrs 10 umfaßt der Meßaufnehmer außerdem eine Sensoranordnung 50. Als Sensoranordnung 50 kann praktisch jede der für derartige Meßwandler üblichen Sensoranordnungen verwendet werden, die Bewegungen des Meßrohrs 10, insb. einiaßseitig und auslaßseitig, erfaßt und in entsprechende als von der Sensoranordnung gelieferte Meßsignale dienende Schwingungssignale umwandelt. So kann die Sensoranordnung 50 z.B. in der dem Fachmann bekannten Weise, mittels eines einiaßßseitig am Meßrohr 10 angeordneten ersten Sensors und mittels eines ausiaßseltigen am Meßrohr 10 angeordneten zweiten Sensors gebildet sein. Als Sensoren können dabei z.B. Schwingungen relativ messende, elektrodynamische Geschwindigkeitssensoren oder aber auch elektrodynamische Wegsensoren oder Beschleunigungssensoren verwendet werden. Anstelle elektrodynamischer Sensoranordnungen können ferner auch mittels resistiver oder plezoelektrischer Dehnungsmeßstreifen messende oder opto-elektronlsche Sensoranordnungen zum Detektieren der Schwingungen des Meßrohrs 10 dienen. Falls erforderlich, können darüber hinaus in der dem Fachmann bekannten Weise noch weitere für die Messung und/oder den Betrieb des Meßwandlers benötigte Sensoren, wie z.B. am Gegenschwinger 20 und/oder am Wandlergehäuse 100 angeordnete zusätzliche Schwingungssensoren, vgl. hierzu auch die US-A 57 36 653, oder z.B. auch am Meßrohr 10, am Gegenschwinger 20 und/oder am Wandlergehäuse 100 angeordente Temperatursensoren vorgesehen sein, vgl. hierzu auch die US-A 47 68 384 oder die WO-A 00/102816.

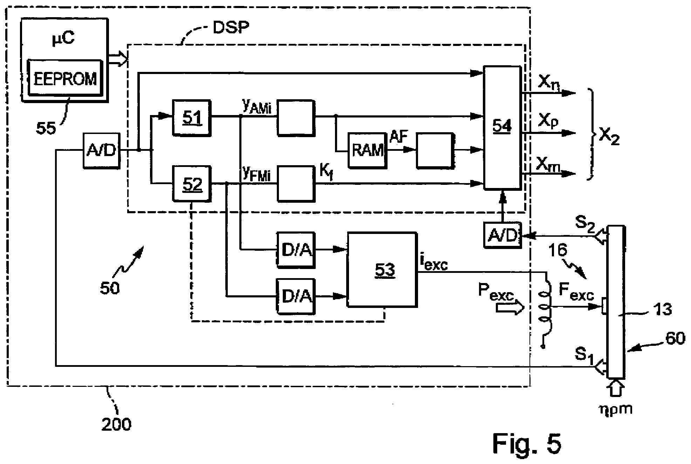

Zum Vibrierenlassen des Messrohrs 10 wird die Erregeranordnung 40, wie bereits erwähnt, mittels eines gleichfalls, insb, mehrfrequent, oszillierenden Erregerstroms $i_{exc}$ von einstellbarer Amplitude und von einstellbarer Erregerfrequenz $f_{exc}$ derart gespeist, dass die - hier eine - Erregerspule im Betrieb von diesem durchflossen sind und in entsprechender Weise die zum Bewegen des korrespondierenden Ankers erforderlichen Magnetfelder erzeugt werden. Der Erregerstrom $i_{exc}$ kann z.B. harmonisch, mehrfrequent oder auch rechteokförmig sein. Die Lateralschwingungs-Erregerfrequenz $f_{excL}$ des zum Aufrechterhalten der Schwingungen des Meßrohrs 10 erforderlichen Erregerstroms $i_{exc}$ kann beim im Ausführungsbeispiel gezeigten Meßaufnehmer in vorteilhafter Weise so gewählt und eingestellt sein, daß das lateral schwingende Messrohr 10 im wesentlichen in einem Biegeschwingungsgrundmode mit einem einzigen Schwingungsbauch oszilliert. Zum Erzeugen und Einstellen des Erregerstroms $I_{exc}$ umfaßt die Meß- und Betriebselektronik 50, wie in Fig. 7 gezeigt, eine entsprechende Treiberschaltung 53, die von einem die einzustellende Erregerfrequenz $f_{axe}$ repräsentierenden Frequenzstellsignal $y_{FM}$ und von einem die einzustellende Amplitude des Erregerstroms $i_{exc}$ repräsentierenden Amplitudenstellsignal $y_{AM}$ gesteuert ist. Die Treiberschaltung 53 kann z.B. mittels eines spannungsgesteuerten Oszillators und eines nachgeschalteten Spannungszu-Stromwandier realisiert sein; anstelle eines analogen Oszillators kann aber z.B. auch ein numerisch gesteuerter digitaler Oszillator zum Einstellen des momentanen Erregerstroms $i_{exc}$ verwendet werden. Zum Erzeugen des Amplitudenstellsignals $y_{AM}$ kann z.B. eine In die Meß- und Betriebselektronik 50 Integrierte Amplitudenregelschaltung 51 dienen, die anhand momentaner Amplituden wenigstens eines der beiden Schwingunsmeßsignale $s_1$, $s_2$, gemessen bei der momentanen Lateralschwingungsfrequenz, sowie anhand entsprechender, konstanter oder variabler Amplitudenreferenzwerte für die Schwingungen W das Amplitudenstellsignal $y_{AM}$ aktualisiert; ggf. können auch momentane Amplituden des Erregerstroms $i_{exc}$ zur Generierung des Amplitudenstellsignals $y_{AM}$ hinzugezogen werden, vgl. Fig. 5. Aufbau und Wirkungsweise derartiger Amplitudenregelschaltungen sind dem Fachmann ebenfalls bekannt. Als ein Beispiel für eine solche Amplitudenregelschaltung sei außerdem auf Messumformer der Serie "PROMASS 80" verwiesen, wie sie von der Anmelderin beispielsweise in Verbindung mit Messaufnehmern der Serie "PROMASS F" oder "PROMASS H" angeboten werden. Deren Amplitudenregelschaltung ist vorteilhaft so ausgeführt daß die lateralen Schwingungen des Meßrohrs 10 auf eine konstante, also auch von der Dichte, p, unabhängige, Amplitude geregelt werden.

Die Frequenzregelschaltung 52 und die Treiberschaltung 53 können z.B. als Phasen-Regelschleife (PLL) ausgebildet sein, die in der dem Fachmann bekannten Welse dazu verwendet wird, anhand einer Phasendifferenz, gemessen zwischen wenigstens einem der Schwinungsmeßsignale $s_1$, $s_2$ und dem einzustellenden bzw. dem momentan gemessenen Erregerstrom $i_{exc}$, das Frequenzstellsignal $y_{FM}$ ständig auf die momentanen Eigenfrequenzen des Meßrohrs 10 abzugleichen. Der Aufbau und die Verwendung solcher Phasenregel-Schleifen zum Betreiben von Meßrohren auf einer ihrer mechanischen Eigenfrequenzen ist z.B. in der US-A 48 01 897 ausführlich beschrieben. Selbstverständlich können auch andere, dem Fachmann bekannte Frequenzregelschaltungen verwendet werden, wie z.B. auch in der US-A 45 24 610 oder der US-A 48 01 897 vorgeschlagen sind. Ferner sei hinsichtlich einer Verwendung solcher Frequenzregelschaltungen für Meßaufnehmer vom Vibrationstyp auf die bereits erwähnten Meßumfomer der Serie "PROMASS 80" verwiesen. Weitere als Treiberschaltung geeignete Schaltungen können beispielsweise auch der US-A 58 69 770 oder auch der US-A 65 05 519 entnommen werden.

Nach einer weiteren Ausgestaltung der Erfindung sind die Amplitudenregelschaltung 51 und die Frequenzregelschaltung 52, wie in Fig. 5 schematisch dargestellt, mittels eines in der Meß- und Betriebselektronik 50 vorgesehenen digitalen Signalprozessors DSP und mittels in diesen entsprechend implementierter und darin ablaufender Programm-Codes realisiert. Die Programm-Codes können z.B. in einem nicht-flüchtigen Speicher EEPROM eines den Signalprozessor steuernden und/oder überwachenden Mikrocomputers 55 persistent oder aber auch permanent gespeichert sein und beim Starten des Signalprozessors DSP in einen, z.B. im Signalprozessors DSP integrierten, flüchtigen Datenspeicher RAM der Meß- und Betriebselektronik 50 geladen werden. Für derartige Anwendungen geeignete Signalprozessoren sind z.B. solche vom Typ TMS320VC33, wie sie von der Firma Texas Instruments inc. am Markt angeboten werden. Es versteht sich dabei praktisch von selbst, daß die Schwingungsmeßsignale $s_1$, $s_2$ für eine Verarbeitung Im Signalprozessor DSP mittels entsprechender Analog-zu-digital-Wandler A/D In entsprechende Digitalsignale umzuwandeln sind, vgl. hierzu insb. die EP-A 866 319. Falls erforderlich, sind vom Signalprozessor ausgegebene Stellsignale, wie z.B. das Amplitudenstellsignal $y_{AML}$ oder das Frequenzstellsignal $y_{FM}$ ggf. in entsprechender Weise digital-zu-analog zu wandeln.

Wie in Fig. 5 dargestellt, sind die von der Sensoranordnung gelieferten, ggf. vorab geeignet konditionierten, Meßsignale $s_1$, $s_2$ ferner einer entsprechenden Meßschaltung 54 der Meß- und Betriebselektronik 50 zugeführt, die dazu dient anhand wenigstens eines der Meßsignale $s_1$, $s_2$ und/oder anhand des Erregerstroms $i_{exc}$ den wenigstens einen Messwert zweiter Art $X_2$ zu erzeugen. Gemäß einer Ausgestaltung der Erfindung Ist die Meßschaltung 54 zumindest anteilig als Durchflußrechner ausgebildet und dient die Meßschaltung dazu, in der dem Fachmann an und für sich bekannten Weise anhand einer zwischen den bei zumindest anteilig lateralschwingendem Meßrohr 10 generierten Schwingungsmeßsignalen $s_1$, $s_2$ detektierten Phasendifferenz einen hier als Massendurchfluß-Meßwert $X_m$ dienenden Meßwert $X_2$ zweiter Art zu ermitteln, der den zu messenden Massenduchfluß m möglichst genau repräsentiert. Als Meßschaltung 21 können hierbei in herkömmlichen Coriolis-Massedurchfluß-Meßgeräten bereits eingesetzte, insb. digitale, Meßschaltungen dienen, die den Massendurchfluß anhand der Schwingungsmeßsignale $s_1$, $s_2$ ermitteln, vgl. hierzu insb. die eingangs erwähnte WO-A 02137063, WO-A 99/39164, die US-A 56 48 616, die US-A 50 69 074. Selbstverständlich können auch andere dem Fachmann bekannte. für Corlolis-Massedurchfluß-Meßgeräte geeignete Meßschaltungen verwendet werden, die Phasen- und/oder Zeitdifferenzen zwischen Schwingunsmaßsignalen der beschriebenen Art messen und entsprechend auswerten. Des weiteren kann die Meßschaltung 54 auch dazu dienen, abgleitet von einer, beispielsweise anhand wenigstens eines der Schwingungsmeßsignale $s_1$, $s_2$, gemessenen Schwingungsfrequenz des wenigstens einen vibrierenden Messrohrs 11 einen als Dichte-Meßwert $X_\rho$ verwendbaren Meßwert $X_2$ zweiter Art zu generieren, der eine Dichte $\rho$ des Mediums oder einer Mediumsphase momentan repräsentiert. Alternativ oder in Ergänzung kann die Meßschaltung auch der Erzeugung eines als Viskositäts-Meßwert $X_\eta$ verwendbaren Meßwert $X_2$ zweiter Art dienen, der eine zu Viskosität $\eta$ des Mediums oder einer Mediumsphase momentan repräsentiert. Es ist für den Fachmann dabei ohne weiteres klar, daß das In-Line-Meßgerät die einzelnen Messwerte $X_2$ für die verschiedenen Meßgrößen m, $\rho$, $\eta$ sowohl Jeweils in einem gemeinsamem Messzyklus, also mit einer gleichen Aktualisierungrate, als auch mit unterschiedlichen Aktualisierungeraten ermitteln kann. Beispielweise erfordert eine hochgenaue Messung des zumeist erheblich variierenden Massedurchflusses m Üblicherweise eine sehr hohe Samplewie auch Aktualisierungsrate, während die im Vergleich dazu über einen längeren Zeitraum zumeist eher wen ig veränderliche Dichte $\rho$ und/oder Viskosität $\eta$ des Mediums ggf. in größeren Zeltabständen aktualisiert werden kann, Des weiteren kann ohne weiteres vorausgesetzt werden, daß aktuell ermittelte Messwerte $X_2$ in der Messgerät-Elektronik E1 zwischengespeichert und so für nachfolgende Verwendungen vorgehalten werden können. In vorteilhafter Weise kann die Meßschaltung 54 desweiteren zumindest anteilig auch mittels des erwähnten Signalprozessors DSP realisiert sein.

Da es sich bei dem hier gezeigten Durchflußmeßaufnehmer 10 praktisch um einen Mehrgrößen-Meßaufnehmer handelt, mit dem alternierend oder auch simultan z.B. der Massedurchfluß, m, anhand der beiden Sensorsinale $s_1$, $s_2$ und/oder die Dichte, $\rho$, anhand der Schwingungsfrequenz $f_{exc}$ und/oder die Viskosität, $\eta$, des Fluids anhand des Erregerstroms $i_{exc}$ detektiert werden können im Rahmen der vorliegenden Erfindung die von der Sensoranordnung gelieferten Schwingungsmeßsignale $s_1$, $s_2$, der Erregerstrom $i_{exc}$ einzeln oder auch in Kombination als "Meßsignal" verstanden werden. Gleichermaßen können entsprechende Meßspannungen des ggf. anstelle des Coriolis-Massedurchflußmesser verwendeten magnetisch-induktiven Durchflußmesser, Vortex-Durchflußmeßgerät oder auch Ultraschall-Durchflußmeßgerät Messsignal sein. Es sei ferner noch erwähnt, daß für den Fall, daß als Meßaufnehmer ein magnetisch-Induktiver Durchflußaufnehmer dient, anstelle der oben gezeigten Erregeranordnung in der dem Fachmann bekannten Welse eine Spulenanordnung als Erregeranordnung verwendet wird, die, von einem Erregerstrom durchflossen, ein Magnetfeld in das Fluid im Meßrohr einkoppelt. In entsprechender Weise dient dann als Sensoranordnung eine spannungsabgreifende Elektrodenanordnung, die eine im Fluid mittels des oben erwähnten Magnetfelds induzierte Meßspannung auskoppelt. Für den Fall, daß als Meßaufnehmer ein Ultraschall-Durchflußaufnehmer dient, wird in der dem Fachmann bekannten Weise ein Ultraschallwandler als Erregeranordnung verwendet, die, von einem entsprechenden Erregersignal angesteuert ist, Ultraschallwellen in das Fluid im Meßrohr einkoppelt. Ebenso dient dann auch üblicherweise ein Ultraschallwandler als Sensoranordnung, der Ultraschallwellen aus dem Fluid auskoppelt und in eine entsprechende Meßspannung umwandelt.

Wie bereits erwähnt, ist das Meßsystem Ist im besonderen dafür vorgesehen, den wenigstens einen Strömungsparameter des in der Rohrleitung strömenden Mediums auch dann zu messen, wenn dieses zwei- oder mehrphasig ausgebildet ist. Medium kann in diesem Falle praktisch jeder strömungs- oder zumindest fließfähige Stoff mit zumindest einer fluiden Mediumsphase, beispielsweise ein Öl-Wasser-Gas-Gemisch oder ein anderes ein Flüssigkeits-Gas-Gemisch, eine Feststoffe mit sich führende Flüssigkeit, ein Aerosol, ein Spray, ein Pulver oder dergleichen, sein.

Allerdings ist nach einer Ausgestaltung der Erfindung vorgesehen, die von dem In-Line-Meßgerät gelieferten Meßwerte $X_2$ zweiter Art überwiegend nur dann zu generieren oder zumindest nur dann als gültigen Meßwert auszugeben, wenn das Medium im wesentlichen einphasig ausgebildet ist oder zumindest als einphasig ausgebildet angenommen werden kann. Wie eingangs erwähnt können nämlich die Ausbildung erster und zweiter Mediumsphasen im strömenden Medium, beispielsweise In Flüssigkeiten mitgeführte Gasblasen und/oder Feststoffpartikeln, im besonderen bei In-Line-Meßgeräte mit einem Meßaufnehmer vom Vibartionstyp, insb. bei der Bestimmung des Massendurchflusses m, zu erhöhten Meßfehlern führen. Bereits im Stand der Technik Ist im Bezug darauf diskutiert worden, daß sich diese sowohl in der zwischen den beiden Schwingungsmeßsignalen $s_1$, $s_2$ gemessenen Phasendifferenz als auch in der Schwingungsamplitude oder der Schwingungsfrequenz jedes der beiden Schwingungsmeßsignale bzw. des Erregerstroms, also In praktisch jedem der bei Messgeräten der beschriebenen Art üblicherweise - direkt oder indirekt - gemessen Betriebsparameter, unmittelbar niederschlagen können. Dies gilt zwar im besonderen, wie auch In der US-B 68 80 410 oder der US-B 65 05 519 ausgeführt, für die bei lateral schwingendem Messrohr ermittelten Betriebsparameter; es kann aber auch für jene Betriebsparameter nicht immer ausgeschlossen werden, die bei torsional schwingendem Messrohr gemessen werden, vgl. hierzu insb. die US-A 45 24 810. Daher ist ferner vorgesehen, das strömende Medium, insb. intern des Meßsystems selbst, wiederkehrend dahingehend zu überwachen, ob es nach wie vor als im wesentlichen einphasig ausgebildet angesehen werden kann, oder ob es zumindest zweiphasig ausgebildet ist. Die Detektion kann dabei beispielsweise auch unter Verwendung des wenigstens einen mittels des In-Line-Meßgeräts erzeugten Meßsignals erfolgen, vgl. hierzu auch die US-B 69 10 366 oder die US-B 65 05 519. Für den Fall, daß das Medium als zumindest zweiphasig erkannt wird, ist ferner vorgesehen, den Meßwert $X_1$ erster Art als den zu messenden Strömungsparameter momentan repräsentierenden Meßwert $X_M$ des Meßsystems auszugeben. Das Meßsystem wird also in einem ersten Betriebsmode betrieben, bei dem der Meßwert $X_M$ praktisch nur in Abhängigkeit von den erfaßten Drücken $p_1$, $p_2$ oder der daraus abgeleiteten Druckdifferenz $\Delta p$ variiert. Das wenigstens eine mittels des In-Line-Meßgeräts erzeugte Meßsignal kann in diesem ersten Betriebsmode im besonderen dazu dienen, das strömende Medium wiederholt daraufhin zu überwachen, ob oder zu welchem Grade es zwei- oder mehrphasig ausgebildet ist. Ferner ist nach einer weiteren Ausgestaltung der Erfindung vorgesehen, den Meßwert $X_2$ zweiter Art als den zu messenden Strömungsparameter momentan repräsentierenden Meßwert $X_M$ des Meßsystems auszugeben, zumindest für den Fall, daß das Medium als im wesentlichen einphasig angesehen wird. Das Meßsystem wird dann also In einem zweiten Betriebsmode betrieben, bei dem der Meßwert $X_M$ wegen der oben erwähnten hohen Meßgenauigkeit praktisch ausschließlich oder zumindest in überwiegendem Maße in Abhängigkeit von dem wenigstens einen mittels des In-Line-Meßgeräts 1 erzeugte Meßsignal varilert. Das wenigstens eine mittels des In-Llne-Meßgeräts erzeugte Meßsignal kann In diesem zweiten Betriebsmode, wie bereits erwähnt, zudem auch dazu dienen, das strömende Medium wiederholt daraufhin zu überwachen, ob es nach wie vor im wesentlichen einphasig ausgebildet ist. Falls erforderlich, können zum Zwecke des Verringerns der gesamten elektrischen Leistungsaufnahme des Meßsystems in wenigstens einem der beiden vorgenannten Betriebsmode der dann jeweils nicht benötigte Meßaufnehmer und/oder die dann jeweils nicht benötigte Meßgerät-Elektronik niedriger getaktet oder ggf. In einen geeigneten Bereitschaftsmodus versetzt werden. Beispielsweise kann also Im ersten Betriebsmode der Durchflußaufnehmer DA und/oder die Meßgerät-Elektronik E1 oder Im zweiten Betriebsmode wenigstens einer der beiden Druckaufnehmer $PA_1$. $PA_2$ und/oder die die Meßgerät-Elektronik E2 abgeschaltet werden.

**Patentansprüche**

1.  Verfahren zum Messen von wenigstens einem Strömungsparameter, insb. einer Strömungsgeschwindigkeit, eines Massendurchflusses oder eines Volumendurchflusses, eines in einer Rohrleitung strömenden zumindest zeitweise zwei- oder mehrphasigen Mediums von dem zumindest eine Mediumsphase fluid ist, welches Verfahren folgende Schritte umfaßt:

    - Strömenlassen des zu messenden Mediums durch wenigstens ein in den Verlauf der Rohrleitung eingefügtes, insb. zumindest zeitweise vibrierendes, Meßrohr eines In-Line-Meßgeräts für strömende Medien,
    - Erzeugen wenigstens eines von wenigstens einem physikalischen Parameter, insb. einer Dichte und/oder einer Viskosität, des Mediums im Meßrohr beeinflußten Meßsignals unter Verwendung einer am Meßrohr und/oder in dessen Nähe angeordneten, zumindest mittelbar auf Änderungen des wenigstens einen physikalischen Parameters des Mediums reagierenden Sensoranordnung des In-Line-Meßgeräts,
    - Erfassen von im Medium wirksamen, insb. statischen, Drücken zum wiederholten Ermitteln einer Druckdifferenz, die, insb. zumindest anteilig entlang des wenigstens einen Meßrohrs, im strömenden Medium herrscht,
    - Erzeugen von Meßwerten erster Art, die den wenigstens einen zu messenden Strömungsparameter des Mediums zeitlich aufeinander folgend, insb. digital, repräsentieren, unter Berücksichtigung einer aktuell für das strömende Medium ermittelten Druckdifferenz sowie unter Verwendung einer Übertragungsfunktion, die zumindest bestimmt, wie die Meßwerte erster Art unter Verwendung der aktuell für das strömende Medium ermittelten Druckdifferenz generiert werden,
    - Erzeugen von Meßwerten zweiter Art, die den wenigstens einen Parameter des Mediums im Meßrohr oder eine davon abgeleitete Meßgröße des Mediums zeitlich aufeinanderfolgend repräsentieren, unter Verwendung des wenigstens einen mittels des In-Line-Meßgeräts erzeugten Meßsignals, sowie
    - wiederkehrendes Überwachen des strömenden Mediums, insb. unter Verwendung des wenigstens einen mittels des In-Line-Meßgeräts erzeugten Meßsignals, zum Erkennen, ob das Medium zumindest zweiphasig ausgebildet ist,

- wobei ein Meßwert erster Art als ein den zu messenden Strömungsparameter momentan repräsentierender Meßwert ausgegeben wird, falls das Medium als zumindest zweiphasig erkannt wird,

- wobei die Meßwerte zweiter Art einen Parameter des Mediums repräsentieren, der im wesentlichen dem durch die Meßwerte erster Art repräsentierten Strömungsparameter entspricht und zumindest zeitweise dann erzeugt werden, wenn das Medium im wesentlichen einphasig ausgebildet ist oder zumindest als einphasig ausgebildet angenommen wird, und

- wobei die Übertragungsfunktion unter Berücksichtigung des wenigstens einen mittels der Sensoranordnung des In-Line-Meßgeräts erzeugten Meßsignals, insb. unter Berücksichtigung wenigstens eines Meßwerts zweiter Art, wiederkehrend an das zu messende Medium angepaßt wird.

2. Verfahren nach vorherigen Anspruch 1, wobei die Meßwerte erster Art einen Massendurchfluss des Mediums repräsentieren.

3. Verfahren nach Anspruch 1, wobei die Meßwerte erster Art einen Volumendurchfluss des Mediums repräsentieren.

4. Verfahren nach einem der vorherigen Ansprüche,

- wobei das In-Line-Meßgerät ferner eine am wenigstens einen Meßrohr angeordnete und zumindest mittelbar auf das darin geführte Medium einwirkende elektro-physikalischen Erregeranordnung umfaßt, und
- wobei der Schritt des Erzeugens des ersten Meßsignals folgende Schritte umfaßt:

  -- Erzeugen von mit dem wenigstens einen physikalischen Parameter des Mediums im Meßrohr korrespondierenden Reaktionen im Medium mittels der Erregeranordnung des In-Line-Meßgeräts und
  -- Erfassen von mit dem wenigstens einen physikalischen Parameter des Mediums im Meßrohr korrespondierenden Reaktionen des Mediums mittels der Sensoranordnung des In-Line-Meßgeräts.

5. Verfahren nach Anspruch 4, wobei der Schritt des Erfassens von mit dem wenigstens einen physikalischen Parameter des Mediums im Meßrohr korrespondierenden Reaktionen des Mediums mittels der Sensoranordnung einen Schritt des Erfassens von Vibrationen des Meßrohrs umfaßt, und wobei die Meßwerte zweiter Art zumindest anteilig anhand von erfaßten Vibrationen des Meßrohrs ermittelt werden.

6. Verfahren nach Anspruch 4 oder 5, wobei es sich bei dem In-Line-Meßgerät um ein solches mit einem Meßaufnehmer vom Vibrationstyp handelt, und wobei der Schritt des Erzeugens von mit dem wenigstens einen physikalischen Parameter des Mediums im Meßrohr korrespondierenden Reaktionen im Medium einen Schritt des Vibrierenlassens des Meßrohrs zum Erzeugen von Vibrationen des Meßrohrs beeinflussenden Reaktionskräften im darin geführten Medium, insb. Trägheitskräften, Reibungskräften und/oder Corioliskräften, umfaßt.

7. Verfahren nach einem der Ansprüche 4 bis 6, wobei die Sensoranordnung des In-Line-Meßgeräts wenigstens einen am Meßrohr und/oder in dessen Nähe angordneten Schwingungssensor umfaßt, und wobei das mittels der Sensoranordnung des In-Line-Meßgeräts erzeugte wenigstens eine Meßsignal Vibrationen des Meßrohrs repräsentiert.

8. Verfahren nach Anspruch 7,

- wobei die Meßwerte zweiter Art zumindest zeitweise und/oder zumindest anteilig basierend auf einer, insb. unter Verwendung des wenigstens einen Meßsignals ermittelten, Schwingungsfrequenz des vibrierenden Meßrohrs generiert werden; und/oder
- wobei die Sensoranordnung des In-Line-Meßgeräts wenigstens zwei, insb. in Strömungsrichtung des Mediums, voneinander beabstandete, jeweils am Meßrohr und/oder in dessen Nähe angeordnete Schwingungssensoren umfaßt, und wobei die Schritte des Erzeugens des Meßsignals mittels der Sensoranordnung Schritte des Erzeugens wenigstens eines, insb. einlaßseitige, Vibrationen des Meßrohrs repräsentierenden ersten Meßsignals mittels eines ersten Schwingungssensors der Sensoranordnung und eines, insb. auslaßseitige, Vibrationen des Meßrohrs repräsentierenden zweiten Meßsignals mittels eines zweiten Schwingungssensors der Sensoranordnung umfaßt.

9. Verfahren nach einem der vorherigen Ansprüche, weiters umfassend einen Schritt des Detektierens, daß das Medium zumindest zweiphasig ausgebildet ist.

10. Verfahren nach einem der vorherigen Ansprüche, wobei es sich bei der Übertragungsfunktion um eine statische, insb. nichtlineare, Kennlinienfunktion handelt, und wobei zum Anpassen der Übertragungsfunktion an das zu messende Medium wenigstens ein die Übertragungsfunktion beschreibender Koeffizient unter Verwendung wenigstens eines der Meßwerte zweiter Art verändert wird.

11. Verfahren nach einem der vorherigen Ansprüche,

- wobei es sich bei der Übertragungsfunktion um eine statische, insb. nichtlineare, Kennlinienfunktion handelt, und
- wobei zum Anpassen der Übertragungsfunktion an das zu messende Medium wenigstens ein die Übertragungsfunktion beschreibender Koeffizient unter Verwendung des wenigstens einen mittels der Sensoranordnung des In-Line-Meßgeräts erzeugten Meßsignals verändert wird.

12. Verfahren nach einem der vorherigen Ansprüche, weiters umfassend: Verwenden des wenigstens einen mittels des In-Line-Meßgeräts erzeugten Meßsignals zum wiederkehrenden Überwachen des strömenden Mediums, ob das Medium einphasig ausgebildet ist.

13. Verfahren nach einem der vorherigen Ansprüche, wobei die Schritte des Erfassens von im Medium wirksamen Drücken Schritte des Erfassens wenigstens eines einlaßseitig des wenigstens einen Meßrohrs im strömenden Medium wirksamen Drucks und/oder Schritte des Erfassen wenigstens eines auslaßseitig des wenigstens einen Meßrohrs im strömenden Medium wirksamen Drucks umfassen.

14. Meßsystem zum Messen von wenigstens einem physikalischen Strömungsparameter, insb. eines Massen- und/oder Volumendurchflusses und/oder einer Strömungsgeschwindigkeit, eines in einer Rohrleitung strömenden zumindest zeitweise zwei- oder mehrphasigen Mediums von dem zumindest eine Mediumsphase fluid ist, welches Meßsystem umfaßt:

- ein In-Line-Meßgerät für strömende Medien mit einem Durchflußaufnehmer sowie eine mit diesem zumindest zeitweise elektrisch gekoppelte Meßgerät-Elektronik, wobei der Durchflußaufnehmer wenigstens ein in den Verlauf der Mediums führenden Rohrleitung eingesetztes, insb. im Betrieb zumindest zeitweise vibrierendes, Meßrohr aufweist, und
- ein Differenzdruck-Meßgerät mit einem, insb. einlaßseitig des Durchflußaufnehmers angeordneten, ersten Druckaufnehmer zum Erfassen eines im Medium herrschenden ersten Drucks und einem, insb. auslaßseitig des Durchflußaufnehmers angeordneten, zweiten Druckaufnehmer zum Erfassen eines im Medium herrschenden zweiten Drucks sowie mit einer Meßgerät-Elektronik, die zumindest zeitweise mit den Druckaufnehmern und zumindest zeitweise mit der Meßgerät-Elektronik des In-Line-Meßgeräts elektrisch gekoppelt ist,
- wobei wenigstens eine der beiden Meßgerät-Elektroniken unter Verwendung einer darin gespeicherten Übertragungsfunktion sowie basierend auf den mittels des ersten und zweiten Druckaufnehmers erfaßten Drücken zumindest zeitweise Meßwerte erster Art erzeugt, die den wenigstens einen zu messenden Strömungsparameter des Mediums zeitlich aufeinander folgend, insb. digital, repräsentieren,
- wobei die Meßgerät-Elektronik des In-Line-Meßgeräts zumindest zeitweise Meßwerte zweiter Art erzeugt, die wenigstens einen im wesentlichen dem durch die Meßwerte erster Art repräsentierten Strömungsparameter entsprechenden Parameter des Mediums im wenigstens einen Meßrohr oder eine davon abgeleitete Meßgröße des Mediums zeitlich aufeinanderfolgend, insb. digital, repräsentieren, und
- wobei die Übertragungsfunktion zumindest bestimmt, wie die Meßwerte erster Art anhand des aktuell erfaßten ersten und zweiten Drucks generiert werden, und unter Berücksichtigung wenigstens eines der mittels des In-Line-Meßgeräts erzeugten Meßwerts zweiter Art wiederkehrend an das zu messende Medium angepaßt wird,
- wobei das Meßsystem dafür eingerichtet ist, das strömende Medium, insb. unter Verwendung des wenigstens einen mittels des In-Line-Meßgeräts erzeugten Meßsignals, wiederkehrend dahingehend zu überwachen, ob das Medium als im wesentlichen einphasig angenommen werden kann, oder ob das Medium zumindest zweiphasig ausgebildet ist, und
- wobei das Meßsystem dafür eingerichtet ist, Meßwerte zweiter Art nur dann als gültigen Meßwert auszugeben, wenn das Medium im wesentlichen einphasig ausgebildet ist oder zumindest als einphasig ausgebildet angenommen wird.

15. Meßsystem gemäß dem vorherigen Anspruch,

- wobei das wenigstens eine Meßrohr im Betrieb zumindest zeitweise vibriert, und der Durchflußaufnehmer wenigstens ein Vibrationen des wenigstens einen Meßrohrs repräsentierendes Meßsignal liefert; und/oder
- wobei die beiden Druckaufnehmer unter Bildung eines Differenzdruckaufnehmers mit einer, insb. differentiell und/oder kapazitiv messenden, Druckmeßzelle verbunden sind, und der Differenzdruckaufnehmer wenigstens ein eine Druckdifferenz im strömenden Medium repräsentierendes Meßsignal liefert.

16. Meßsystem gemäß einem der Ansprüche 14 bis 15, umfassend eine erste Meßgerät-Elektronik sowie eine mit dieser zumindest zeitweise kommunizierende zweite Meßgerät-Elektronik, wobei der Durchflußaufnehmer unter Bildung eines In-Line-Meßgeräts für in Rohrleitungen strömende Medien, insb. eines Coriolis-Massendurchfluß-/ Dichte-Meßgeräts, mit der ersten Meßgerät-Elektronik elektrisch gekoppelt ist, und wobei die beiden Druckaufnehmer unter Bildung eines Differenzdruck-Meßgeräts für in Rohrleitungen strömende Medien mit der zweiten Meßgerät- Elektronik elektrisch gekoppelt sind.

17. Meßsystem gemäß einem der Ansprüche 14 bis 16, wobei das Meßsystem dafür eingerichtet ist, einen Meßwert $(X_1)$ erster Art als ein den zu messenden Strömungsparameter momentan repräsentierender Meßwert $(X_M)$ des Meßsystems auszugeben, falls, das Medium als zumindest zweiphasig erkannt wird.

18. Meßsystem gemäß dem vorherigen Anspruch, wobei das Meßsystem dafür eingerichtet ist, Meßwerte $(X_2)$ zweiter Art nur zu generieren, wenn das Medium im wesentlichen einphasig ausgebildet ist oder zumindest als einphasig ausgebildet angenommen wird.

19. Verwenden des Meßsystems gemäß einem der Ansprüche 14 bis 18 zum Messen eines Massen- und/oder Volumendurchflusses und/oder einer Strömungsgeschwindigkeit eines in einer Rohrleitung strömenden mehrphasigen, insb. zweiphasigen, Mediums, insb. zur Umsetzung des Verfahrens gemäß einem der Ansprüche 1 bis 13.

**Claims**

1. Procedure for the measurement of at least one flow parameter, particularly a flow velocity, a mass flow or a volume flow, of a medium flowing through a pipe, said medium being at least temporarily two-phase or multi-phase of which at least one medium phase is fluid, wherein said procedure comprises the following steps:

   - The medium to be measured is allowed to flow through at least one measuring tube, particularly vibrating at least temporarily, of an in-line measuring device for flowing media, said measuring tube being inserted in the course of the pipe,
   - Generation of at least one measuring signal influenced by at least a physical parameter, particularly a density and/or a viscosity, of the medium in the measuring tube using a sensor arrangement of the in-line measuring device which is arranged on the measuring tube and/or in the vicinity of said tube, and reacts at least indirectly to changes of the at least one physical parameter of the medium,
   - Measurement of pressures, particularly static pressures, acting in the medium, for the repeated determination of a pressure difference which is present in the flowing medium, particularly at least partially along the at least one measuring tube,
   - Generation of measured values of the first type, which represent in a time sequence, particularly digitally, the at least one medium flow parameter to be measured, taking into account a pressure difference currently determined for the flowing medium, and using a transmission function, which at least determines how the measured values of the first type are generated using the pressure difference currently determined for the flowing medium,
   - Generation of measured values of the second type, which represent, in a time sequence, the at least one parameter of the medium in the measuring tube or a measured variable of the medium derived from said parameter, using the at least one measuring signal generated using the in-line measuring device, as well as
   - Repeated monitoring of the flowing medium, particularly using the at least one measuring signal generated using the in-line measuring device to determine whether the medium is at least two-phase,
   - wherein a measured value of the first type is output as a measured value currently representing the flow parameter to be measured if the medium is detected to be at least two-phase,
   - wherein the measured values of the second type represent a parameter of the medium which essentially corresponds to the flow parameter represented by the measured values of the first type, and are at least temporarily generated if the medium is essentially single-phase or is at least presumed to be single-phase, and
   - wherein the transmission function is repeatedly adapted to the medium to be measured taking into account the at least one measuring signal generated using the sensor arrangement of the in-line measuring device, particularly taking into account at least a measured value of the second type.

2. Procedure as claimed in the previous Claim 1, wherein the measured values of the first type represent a mass flow of the medium.

3. Procedure as claimed in Claim 1, wherein the measured values of the first type represent a volume flow of the medium.

4. Procedure as claimed in one of the previous claims,

   - wherein the in-line measuring device further comprises an electrophysical exciter arrangement arranged on at least one measuring tube and acting at least indirectly on the medium guided through said measuring tube, and
   - wherein the step involving the generation of the first measuring signal comprises the following steps:

      -- Generation of reactions in the medium, corresponding to the at least one physical parameter of the medium in the measuring tube, by means of the exciter arrangement in the in-line measuring device, and
      -- Recording of reactions of the medium, corresponding to the at least one physical parameter of the medium in the measuring tube, by means of the sensor arrangement of the in-line measuring device.

5. Procedure as claimed in Claim 4, wherein the step involving the recording of reactions of the medium, corresponding to the at least one physical parameter of the medium in the measuring tube, with the sensor arrangement comprises a step to record vibrations of the measuring tube, and wherein the measured values of the second type are determined, at least in part, on the basis of recorded vibrations of the measuring tube.

6. Procedure as claimed in Claim 4 or 5, wherein the in-line measuring device is a vibronic-type sensor, and wherein the step involving the generation of reactions in the medium, corresponding to the at least one physical parameter of the medium in the measuring tube, comprises a step wherein the measuring tube is allowed to vibrate for the purpose of generating reaction forces, which influence vibrations of the measuring tube, in the medium conducted in said measuring tube, particularly inertia forces, frictional forces and/or Coriolis forces.

7. Procedure as claimed in one of the Claims 4 to 6, wherein the sensor arrangement of the in-line measuring device comprises at least one vibration sensor arranged on the measuring tube and/or in the proximity of the measuring tube, and wherein the at least one measuring signal, generated by means of the sensor arrangement of the in-line measuring device, represents vibrations of the measuring tube.

8. Procedure as claimed in Claim 7,

   - wherein the measured values of the second type are generated at least temporarily and/or at least partially on the basis of a vibration frequency of the vibrating measuring tube, particularly determined using the at least one measuring signal; and/or
   - wherein the sensor arrangement of the in-line measuring device comprises at least two vibration sensors, particularly arranged in the flow direction of the medium and spaced at a distance from one another, on and/or near the measuring tube, and wherein the steps involving the generation of the measuring signal using the sensor arrangement comprise steps to generate at least a first measuring signal representing vibrations of the measuring tube, particularly on the inlet side, using a first vibration sensor of the sensor arrangement, and a second measuring signal representing vibrations of the measuring tube, particularly on the outlet side, using a second vibration sensor of the sensor arrangement.

9. Procedure as claimed in one of the previous claims, further comprising a step to detect that the medium is at least two-phase.

10. Procedure as claimed in one of the previous claims, wherein the transmission function is a static, particularly non-linear, characteristic function, and wherein - to adapt the transmission function to the medium to be measured - at least one coefficient describing the transmission function is modified using at least one of the measured values of the second type.

11. Procedure as claimed in one of the previous claims,

   - wherein the transmission function is a static, particularly non-linear, characteristic function, and
   - wherein - to adapt the transmission function to the medium to be measured - at least one coefficient describing the transmission function is modified using the at least one measuring signal generated by means of the sensor arrangement of the in-line measuring device.

12. Procedure as claimed in one of the previous claims, further comprising: use of the at least one measuring signal, generated using the in-line measuring device, for the repeated monitoring of the flowing medium to detect whether the medium is single-phase.

13. Procedure as claimed in one of the previous claims, wherein the steps to record pressures that are effective in the medium comprise steps to record at least a pressure on the inlet side of the at least un measuring tube and acting in the flowing medium, and/or steps to record at least one pressure on the outlet side of the at least one measuring tube and acting in the flowing medium.

14. Measuring system to measure at least one physical flow parameter, particularly a mass flow and/or a volume flow and/or a flow velocity of a medium flowing through a pipe, said medium being at least temporarily two-phase or multi-phase, and wherein at least one medium phase is fluid, wherein said measuring system comprises:

 - an in-line measuring device for flowing medium with a flow sensor and a measuring device electronics unit at least occasionally electrically coupled to said sensor, wherein the flow sensor has at least one measuring tube which is inserted in the course of the pipe conducting the medium and particularly vibrates at least temporarily during operation, and
 - a differential pressure measuring device with a first pressure sensor, particularly arranged on the inlet side of the flow sensor, wherein said pressure sensor is designed to measure a first pressure present in the medium, and with a second pressure sensor, particularly arranged on the outlet side of the flow sensor, wherein said pressure sensor is designed to measure a second pressure present in the medium, as well as with a measuring device electronics unit that is electrically coupled at least temporarily with the pressure sensors and at least temporarily with the measuring device electronics of the in-line measuring device,
 - wherein at least one of the two measuring device electronics units at least occasionally generates measured values of the first type using a transmission function saved in the electronics unit and based on the pressures measured using the first and second pressure sensor, wherein said measured values represent - consecutively over time, particularly digitally - the at least one flow parameter of the medium to be measured,
 - wherein the measuring device electronics unit of the in-line measuring device at least temporarily generates measured values of the second type, which represent
 - consecutively over time, particularly digitally - at least a parameter of the medium in at least one measuring tube or a measured variable of the medium derived from said parameter, said parameter essentially corresponding to the flow parameter represented by the measured values of the first type, and
 - wherein the transmission function at least determines how the measured values of the first type are generated using the first and second pressure currently measured, and is repeatedly adapted to the medium to be measured taking into consideration at least one measured value of the second type which is generated using the in-line measuring device,
 - wherein the measuring system is configured to repeatedly monitor the flowing medium, particularly using the at least one measuring signal generated by means of the in-line measuring device, to determine whether the medium can be assumed to be essentially single-phase or whether the medium is at least two-phase, and
 - wherein the measuring system is configured to only output measured values of the second type as a valid measured value if the medium is essentially single-phase or is at least assumed to be single-phase.

15. Measuring system as claimed in the previous claim,

 - wherein the at least one measuring tube vibrates at least temporarily during operation, and wherein the flow sensor delivers at least a measuring signal that represents vibrations of the at least one measuring tube; and/or
 - wherein the two sensors are connected with a pressure measuring cell, particularly differential and/or capacitive, to form a differential pressure sensor, and wherein the differential pressure sensor delivers at least a measuring signal that represents a pressure difference in the flowing medium.

16. Measuring system as claimed in one of the Claims 14 to 15, comprising a first measuring device electronics unit and a second measuring device electronics unit at least temporarily communicating with said first electronics unit, wherein the flow sensor is electrically coupled with the first measuring device electronics unit, forming an in-line measuring device for media flowing through pipes, particularly a Coriolis mass flowmeter/density meter, and wherein the two pressure sensors are electrically coupled with the second measuring device electronics unit, forming a differential pressure measuring device for media flowing through pipes.

17. Measuring system as claimed in one of the Claims 14 to 16, wherein the measuring system is configured to output a measured value $(X_1)$ of the first type as a measured value $(X_M)$ of the measuring system currently representing the flow parameter to be measured if the medium is recognized as being at least two-phase.

18. Measuring system as claimed in the previous claim, wherein the measuring system is configured to only generate measured values $(X_2)$ of the second type if the medium is essentially single-phase or is at least presumed to be single-phase.

19. Use of the measuring system as claimed in one of the Claims 14 to 18 designed to measure a mass flow and/or a volume flow and/or a flow velocity of a multi-phase medium, particularly a two-phase medium, flowing through a pipe, particularly to implement the procedure as claimed in one of the Claims 1 to 13.

**Revendications**

1. Procédé destiné à la mesure d'au moins un paramètre d'écoulement, notamment une vitesse d'écoulement, un débit massique ou un débit volumique, d'un produit s'écoulant dans une conduite, lequel produit est au moins temporairement biphasique ou polyphasique et dont une phase est au moins fluide, lequel procédé comprend les étapes suivantes :

   - Écoulement du produit à mesurer à travers un tube de mesure, notamment vibrant au moins temporairement, d'un appareil de mesure en ligne pour produits en écoulement, lequel tube de mesure est inséré dans le tracé de la conduite,
   - Génération d'au moins un signal de mesure influencé par un paramètre physique, notamment une densité et/ou une viscosité, du produit s'écoulant dans le tube de mesure, en utilisant un circuit de capteur de l'appareil de mesure en ligne disposé sur le tube de mesure et/ou dans sa proximité, et réagissant au moins indirectement aux changements de l'au moins un paramètre physique du produit,
   - Mesure de pressions, notamment statiques, agissant dans le produit, pour la détermination répétée d'une différence de pression régnant dans le produit en écoulement, notamment au moins partiellement le long de l'au moins un tube de mesure,
   - Génération de valeurs mesurées de premier type, qui représentent consécutivement dans le temps, notamment sous forme numérique, l'au moins un paramètre d'écoulement à mesurer du produit, en tenant compte d'une différence de pression déterminée actuellement pour le produit en écoulement, ainsi qu'en utilisant une fonction de transfert, qui détermine au minimum la manière dont les valeurs mesurées de premier type sont générées sur la base de la différence de pression actuellement déterminée pour le produit en écoulement,
   - Génération de valeurs mesurées de second type, qui représentent consécutivement dans le temps l'au moins un paramètre du produit dans le tube de mesure ou une grandeur de mesure du produit dérivée dudit paramètre, en utilisant l'au moins un signal de mesure généré au moyen de l'appareil de mesure en ligne, ainsi que
   - Surveillance récurrente du produit en écoulement, notamment en utilisant l'au moins un signal de mesure généré au moyen de l'appareil de mesure en ligne, en vue de déterminer si le produit est au moins biphasique,
   - une valeur mesurée de premier type étant délivrée en tant que valeur mesurée représentant momentanément un paramètre d'écoulement à mesurer, au cas où le produit est détecté comme étant au moins biphasique,
   - les valeurs mesurées de second type représentant un paramètre du produit, qui correspond pour l'essentiel au paramètre d'écoulement représenté par les valeurs mesurées de premier type, et les valeurs mesurées de second type étant générées au moins temporairement lorsque le produit est pour l'essentiel monophasique ou au moins lorsqu'il est supposé être monophasique, et
   - la fonction de transfert étant adaptée de façon récurrente au produit à mesurer en tenant compte de l'au moins un signal de mesure généré au moyen du circuit de capteur de l'appareil de mesure en ligne, notamment en tenant compte d'au moins une valeur mesurée de second type.

2. Procédé selon la revendication précédente 1, pour lequel les valeurs mesurées de premier type représentent un débit massique du produit.

3. Procédé selon la revendication 1, pour lequel les valeurs mesurées de premier type représentent un débit volumique du produit.

4. Procédé selon l'une des revendications précédentes,

- pour lequel l'appareil de mesure en ligne comprend en outre un circuit d'excitation électrophysique disposé sur l'au moins un tube de mesure et agissant au moins indirectement sur le produit guidé dans le dit tube de mesure, et

- pour lequel l'étape de génération du premier signal de mesure comprend les étapes suivantes :

-- Génération de réactions dans le produit, correspondant à l'au moins un paramètre physique du produit dans le tube de mesure, au moyen du circuit d'excitation de l'appareil de mesure en ligne, et

-- Détection de réactions du produit, correspondant à l'au moins un paramètre physique du produit dans le tube de mesure, au moyen du circuit de capteur de l'appareil de mesure en ligne.

5. Procédé selon la revendication 4, pour lequel l'étape de détection de réactions, correspondant à l'au moins un paramètre physique du produit dans le tube de mesure, au moyen du circuit de capteur, comprend une étape de détection des vibrations du tube de mesure, et pour lequel les valeurs mesurées de second type sont déterminées au moins partiellement sur la base des vibrations du tube de mesure.

6. Procédé selon la revendication 4 ou 5, pour lequel il s'agit, concernant l'appareil de mesure en ligne, d'un tel appareil doté d'un capteur du type à vibrations, et pour lequel l'étape de génération de réactions dans le produit, correspondant à l'au moins un paramètre physique du produit dans le tube de mesure, comprend une étape de mise en vibration du tube de mesure destinée à la génération de forces de réaction - influençant les vibrations du tube de mesure - dans le produit guidé dans ledit tube de mesure, notamment des forces d'inertie, des forces de frottement et/ou des forces de Coriolis.

7. Procédé selon l'une des revendications 4 à 6, pour lequel le circuit de capteur de l'appareil de mesure en ligne comprend un capteur de vibration disposé sur le tube de mesure et/ou dans sa proximité, et pour lequel l'au moins un signal, généré au moyen du circuit de capteur de l'appareil de mesure en ligne, représente les vibrations du tube de mesure.

8. Procédé selon la revendication 7,

- pour lequel les valeurs mesurées de second type sont générées au moins temporairement et/ou au moins partiellement sur la base d'une fréquence de vibration du tube de mesure vibrant, laquelle fréquence est déterminée au moyen de l'au moins un signal de mesure ; et/ou

- pour lequel le circuit de capteur de l'appareil de mesure en ligne comprend au moins deux capteurs de vibration, notamment disposés dans le sens d'écoulement du produit, espacés l'un de l'autre, respectivement sur le tube de mesure et/ou dans sa proximité, et pour lequel les étapes de génération du signal de mesure au moyen du circuit de capteur comprend des étapes de génération du signal de mesure au moyen du circuit de capteur, des étapes de génération d'au moins un premier signal de mesure représentant les vibrations du tube de mesure, notamment côté entrée, au moyen d'un premier capteur de vibration du circuit de capteur, et d'au moins un deuxième signal de mesure représentant les vibrations du tube de mesure, notamment côté sortie, au moyen d'un deuxième capteur de vibration du circuit de capteur.

9. Procédé selon l'une des revendications précédentes, comprenant en outre une étape de détection visant à déterminer si le produit est au moins biphasique.

10. Procédé selon l'une des revendications précédentes, pour lequel il s'agit, concernant la fonction de transfert, d'une fonction de courbe caractéristique statique, notamment non linéaire, et pour lequel au moins un coefficient décrivant la fonction de transfert est modifié en utilisant au moins l'une des valeurs mesurées de second type, en vue de l'adaptation de la fonction de transfert au produit à mesurer.

11. Procédé selon l'une des revendications précédentes,

- pour lequel il s'agit, concernant la fonction de transfert, d'une fonction de courbe caractéristique statique, notamment non linéaire, et

- pour lequel au moins un coefficient décrivant la fonction de transfert est modifié en utilisant l'au moins un signal de mesure généré au moyen du circuit de capteur de l'appareil de mesure en ligne, en vue de l'adaptation de la fonction de transfert au produit à mesurer.

12. Procédé selon l'une des revendications précédentes, comprenant en outre :

utilisation de l'au moins un signal de mesure, généré au moyen de l'appareil de mesure en ligne, en vue de la surveillance récurrente du produit en écoulement, afin de détecter si le produit est monophasique.

13. Procédé selon l'une des revendications précédentes, pour lequel les étapes de mesure de pressions agissant dans le produit comprennent des étapes de mesure d'au moins une pression côté entrée de l'au moins un tube de mesure et agissant dans le produit en écoulement, et/ou des étapes de mesure d'au moins une pression côté sortie de l'au moins un tube de mesure et agissant dans le produit en écoulement.

14. Système de mesure destiné à la mesure d'au moins un paramètre d'écoulement physique, notamment un débit massique et/ou volumique et/ou une vitesse d'écoulement d'un produit s'écoulant dans une conduite, lequel produit est au moins temporairement biphasique ou polyphasique et dont une phase est au moins fluide, lequel système de mesure comprend :

- un appareil de mesure en ligne pour produits en écoulement, avec un capteur de débit, ainsi qu'une électronique d'appareil de mesure couplée électriquement au moins temporairement audit appareil, le capteur de débit comportant au moins un tube de mesure inséré dans le tracé de la conduite guidant le produit, et notamment vibrant au moins temporairement en fonctionnement, et
- un appareil de mesure de pression différentielle avec un premier capteur de pression, notamment disposé côté entrée du capteur de débit, lequel capteur de pression est destiné à la mesure d'une première pression régnant dans le produit, et avec un deuxième capteur de pression, notamment disposé côté sortie du capteur de débit, lequel capteur de pression est destiné à la mesure d'une deuxième pression régnant dans le produit, ainsi qu'avec une électronique d'appareil de mesure, qui est couplée électriquement au moins temporairement avec les capteurs de débit et au moins temporairement avec l'électronique de l'appareil de mesure en ligne,
- au moins l'une des deux électroniques d'appareil de mesure générant au moins temporairement des valeurs mesurées de second type en utilisant une fonction de transfert qui y est mémorisée, ainsi que sur la base des pressions mesurées au moyen du premier et du deuxième capteur de pression, lesquelles valeurs mesurées représentent consécutivement dans le temps, notamment sous forme numérique, l'au moins un paramètre d'écoulement à mesurer,
- l'électronique d'appareil de mesure de l'appareil de mesure en ligne générant au moins temporairement des valeurs mesurées de second type, qui représentent consécutivement dans le temps, notamment sous forme numérique, un paramètre du produit dans l'au moins un tube de mesure ou une grandeur mesurée dérivée dudit paramètre, lequel paramètre correspond pour l'essentiel au paramètre d'écoulement représenté par les valeurs mesurées de premier type, et
- la fonction de transfert déterminant au minimum la manière dont les valeurs mesurées de premier type sont générées sur la base de la première et de la deuxième pression actuellement mesurées et - en tenant compte d'au moins une valeur mesurée de second type générée au moyen de l'appareil de mesure en ligne - la manière dont les valeurs mesurées de premier type sont adaptées de façon récurrente au produit à mesurer,
- le système de mesure étant configuré en vue de surveiller de façon récurrente le produit en écoulement, notamment en utilisant l'au moins un signal de mesure généré au moyen de l'appareil de mesure en ligne, afin de déterminer si le produit peut être supposé comme étant pour l'essentiel monophasique, ou si le produit est au moins biphasique, et
- le système de mesure étant configuré en vue de délivrer des valeurs mesurées de second type, en tant que valeur mesurée valable, uniquement lorsque le produit est pour l'essentiel monophasique ou est au minimum supposé comme étant monophasique.

15. Système de mesure selon la revendication précédente,

- pour lequel l'au moins un tube de mesure vibre an moins temporairement en fonctionnement, et pour lequel le capteur de débit délivre au moins un signal de mesure représentant les vibrations de l'au moins un tube de mesure ; et/ou
- pour lequel les deux capteurs sont reliés de manière à former un capteur de pression différentielle avec une cellule de mesure de pression, notamment différentielle et/ou capacitive, et pour lequel le capteur de pression différentielle délivre au moins un signal de mesure représentant une différence de pression dans le produit en écoulement.

16. Système de mesure selon l'une des revendications 14 à 15, comprenant une première électronique d'appareil de mesure ainsi qu'une deuxième électronique d'appareil de mesure communiquant au moins temporairement avec celle-ci, le capteur de débit étant couplé électriquement avec la première électronique de mesure de manière à former un appareil de mesure en ligne pour des produits s'écoulant dans des conduites, notamment un débitmètre massique Coriolis / densimètre, et pour lequel les deux capteurs de pression sont couplés électriquement avec la deuxième électronique d'appareil de mesure de manière à former un appareil de mesure à pression différentielle pour des produits s'écoulant dans des conduites.

**17.** Système de mesure selon l'une des revendications 14 à 16, pour lequel le système de mesure est configuré de telle sorte à délivrer une valeur mesurée ($X_1$) de premier type en tant que valeur mesurée ($X_M$) du système de mesure, représentant momentanément un paramètre d'écoulement à mesurer, dans le cas où le produit est reconnu comme étant au moins biphasique.

**18.** Système de mesure selon la revendication précédente, pour lequel le système de mesure est configuré de telle sorte à générer des valeurs mesurées ($X_2$) de second type uniquement lorsque le produit est pour l'essentiel monophasique ou au moins lorsqu'il est supposé être monophasique.

**19.** Système de mesure selon l'une des revendications 14 à 18 destiné à la mesure d'un débit massique et/ou volumique et/ou d'une vitesse d'écoulement d'un produit polyphasique, notamment biphasique, s'écoulant dans une conduite, notamment pour la mise en œuvre du procédé selon l'une des revendications 1 à 13.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03095950 A
- WO 03095949 A
- WO 0237063 A
- WO 0133174 A
- WO 0057141 A
- WO 9939164 A
- WO 9807009 A
- WO 9516897 A
- WO 8803281 A
- US 20030208325 A
- US 6880410 B
- US 6691583 B
- US 6651513 B
- US 6513393 B
- US 6505519 B
- US 6006609 A
- US 5869770 A
- US 5861561 A
- US 5796011 A
- US 5616868 A
- US 5602346 A
- US 5602345 A
- US 5531126 A
- US 5359881 A
- US 5301557 A
- US 5253533 A
- US 5218873 A
- US 5069074 A
- US 4876898 A
- US 4733569 A
- US 4660421 A
- US 4524610 A
- US 4491025 A
- US 4187721 A
- EP 1291639 A
- EP 1281938 A
- EP 1001254 A
- EP 553939 A
- US 524610 A4
- WO 0036379 A
- EP 1039269 A
- US 6031740 A
- US 5540103 A
- US 5351554 A
- US 4563904 A
- US 6397663 B
- US 6330831 B
- US 6293156 B
- US 6189389 B
- US 5531124 A
- US 5463905 A
- US 5131279 A
- US 4787252 A
- US 6910366 B
- US 6311136 B
- US 5400657 A
- JP 10281846 A
- EP 1291638 A
- US 20050081643 A
- US 200510022611 A
- WO 2005057137 A
- WO 2005057131 A
- US 5259250 A
- US 20050016292 A
- WO 03062759 A
- WO 03073047 A
- WO 03087735 A
- WO 04046660 A
- US 20040254748 A
- US 6860158 B
- US 6308580 B
- US 5357811 A
- US 6667973 A
- US 5648616 A
- US 6840109 B
- US 6006609 B
- US 4777833 A
- US 4801897 A
- US 4879911 A
- US 5009109 A
- US 5736653 A
- US 4768384 A
- WO 00102816 A
- US 6505519 A
- EP 866319 A
- WO 02137063 A
- US 4524810 A